# EUROPEAN PATENT APPLICATION

(11) **EP 4 517 743 A1**
(43) Date of publication of application: **05.03.2025**
(21) Application number: 23823050.2
(22) Date of filing: 09.06.2023
(51) Int. Cl.: G10L 15/22

(54) **MAN-MACHINE DIALOGUE METHOD, DEVICE AND SYSTEM**

(30) Priority: 13.06.2022 CN 202210663567
(71) Applicant: Huawei Technologies Co., Ltd., Shenzhen, Guangdong 518129 (CN)
(72) Inventor: SONG, Kaikai, Shenzhen, Guangdong 518129 (CN); ZHAO, Shiqi, Shenzhen, Guangdong 518129 (CN); ZHOU, Jianhui, Shenzhen, Guangdong 518129 (CN); SHEN, Bo, Shenzhen, Guangdong 518129 (CN)
(74) Representative: Isarpatent
(86) International application number: PCT/CN2023/099440
(87) International publication number: WO 2023/241482

(57) **Abstract**

A human-computer dialog method is provided, and includes: A terminal device (200) receives a speech signal; the terminal device (200) obtains a first instruction based on the speech signal; the terminal device (200) sends the speech signal or a text of the speech signal to a server (100), where the server (100) is configured to obtain a second instruction based on the speech signal, and the text of the speech signal is obtained by the terminal device (200) based on the speech signal; the terminal device (200) receives the second instruction sent by the server (100); and when a first obtained instruction is not capable of being directly executed, the terminal device (200) selects a target instruction from the first instruction and the second instruction for execution, where the target instruction is the first instruction or the second instruction. The terminal device (200) may select the target instruction from the two instructions, so that accuracy of a speech response can be improved.

## Description

This application claims priority to Chinese Patent Application No. 202210663567.1, filed with the China National Intellectual Property Administration on June 13, 2022 and entitled "HUMAN-COMPUTER DIALOG METHOD AND SYSTEM, AND DEVICE", which is incorporated herein by reference in its entirety.

### TECHNICAL FIELD

Embodiments of this application relate to technologies, and in particular, to a human-computer dialog method and system, and a device.

### BACKGROUND

A voice assistant is an application currently provided on most terminal devices (such as a vehicle, a smartphone, and a smart speaker). The voice assistant can resolve a problem for a user or present some functions of the terminal device through intelligent conversation and instant questioning and answering.

Applications of the voice assistant are diversified. For example, in combination with artificial intelligence (Artificial Intelligence, AI), automatic speech recognition (Automatic Speech Recognition, ASR), and natural language understanding (Natural Language Understanding, NLU), through a wireless connection, the voice assistant can play multimedia resources, and can be connected to internet of things apparatuses to implement smart test home control, smart test home, vehicle-mounted speech control and teleconferencing systems, and the like.

Currently, accuracy of a response of the voice assistant is usually low.

### SUMMARY

This application provides a human-computer dialog method and system, and a device. In the method, a terminal device sends a speech signal or a text of the speech signal to a server, and the server and the terminal device respectively generate a first instruction and a second instruction based on the speech signal or the text. When an instruction first obtained by the terminal device is not capable of being executed, a target instruction is selected from the first instruction and the second instruction for execution. In the method, the terminal device may select the target instruction from the two instructions, so that accuracy of a speech response can be improved.

According to a first aspect, an embodiment of this application provides a human-computer dialog method, applied to a terminal device. The method includes:

The terminal device receives a speech signal;
the terminal device obtains a first instruction based on the speech signal;
the terminal device sends the speech signal or a text of the speech signal to a server, where the server is configured to obtain a second instruction based on the speech signal, and the text of the speech signal is obtained by the terminal device based on the speech signal;
the terminal device receives the second instruction sent by the server; and
when a first obtained instruction is not capable of being directly executed, the terminal device selects a target instruction from the first instruction and the second instruction for execution, where the target instruction is the first instruction or the second instruction.

In this embodiment of this application, the terminal device sends the speech signal or the text of the speech signal to the server, and the server and the terminal device respectively generate the first instruction and the second instruction based on the speech signal or the text. When the first obtained instruction is not capable of being executed, the target instruction is selected from the first instruction and the second instruction for execution. In the method, the terminal device and the server simultaneously process the speech signal, so that the terminal device can select the target instruction from the two instructions. This can improve accuracy of a speech response.

That an instruction is not capable of being directly executed means that another instruction needs to be considered, and the instruction is not capable of being executed before the another instruction is considered. For example, when the instruction is not capable of being directly executed, the terminal device needs to wait for arrival of the another instruction, and then compare the two instructions to select a to-be-executed target instruction from the two instructions. The instruction is not capable of being executed before the another instruction is obtained or the another instruction is determined. For example, when a confidence level of the first instruction is lower than a threshold, the terminal device determines that the first instruction is not capable of being directly executed, and therefore waits for the second instruction. If a confidence level of the second instruction is higher than that of the first instruction, the terminal device executes the second instruction, or if the confidence level of the second instruction is lower than that of the first instruction, the terminal device executes the first instruction. For another example, after determining that the first instruction is not capable of being directly executed, the terminal device waits for the second instruction. If the second instruction is not obtained within preset time, the terminal device may determine that the second instruction is abnormal, and further execute the first instruction.

That the instruction is capable of being directly executed means that the instruction may be directly executed without considering another instruction. For example, if the terminal device first obtains the first instruction, and determines that the first instruction is capable of being directly executed, the terminal device may immediately execute the first instruction without waiting for the second instruction. It should be noted that, when the instruction is the first instruction, the another instruction is the second instruction, and when the instruction is the second instruction, the another instruction is the first instruction.

In a possible implementation, when a first obtained instruction is not capable of being directly executed, that the terminal device selects a target instruction from the first instruction and the second instruction for execution includes:
when the target instruction is the first obtained instruction and the first obtained instruction is not capable of being executed, skipping executing the first obtained instruction; or
when the target instruction is the first obtained instruction and the first obtained instruction is capable of being executed, executing the first obtained instruction.

With reference to the first aspect, in a possible implementation, the method further includes:

The terminal device executes the first obtained instruction when the first obtained instruction is capable of being directly executed; and
the terminal device does not execute a later obtained instruction.

In this embodiment of this application, the terminal device sends the speech signal or the text of the speech signal to the server, and the server and the terminal device respectively generate the first instruction and the second instruction based on the speech signal or the text. When the first obtained instruction is capable of being executed, the instruction is first executed. In the method, speech response efficiency can be further improved.

With reference to the first aspect, in a possible implementation, before the selecting a target instruction from the first instruction and the second instruction for execution, the method further includes:
When obtaining the first instruction, if the terminal device does not receive the second instruction, the terminal device determines an executable status of the first instruction, where the executable status includes direct execution and non-direct execution; and
when determining that the first instruction is not capable of being directly executed, the terminal device waits for the second instruction.

According to the method, the executable status of the first instruction is determined, so that the second instruction can be waited for when the first instruction is inaccurate or is not capable of being executed. This ensures response accuracy.

With reference to the first aspect, in a possible implementation, the determining an executable status of the first instruction includes:
The terminal device determines the executable status of the first instruction based on first decision-making information, where the first decision-making information includes at least one of a decision-making result of a previous round, a status identifier of a dialog of the previous round, an intent result of a current round determined by the terminal device, an instruction result of the current round determined by the terminal device, and a confidence level of the first instruction.

The decision-making result of the previous round indicates a source of an instruction executed for the dialog of the previous round, and the source includes the server and the terminal device. The status identifier indicates a single round or a plurality of rounds. The intent result indicates a new intent or a multi-round intent. The instruction result includes normality or abnormity, and the abnormity indicates that an operation corresponding to the speech signal is not capable of being performed.

With reference to the first aspect, in a possible implementation, before the selecting a target instruction from the first instruction and the second instruction for execution, the method further includes:
When obtaining the second instruction, if the terminal device does not receive the first instruction, the terminal device determines an executable status of the second instruction; and
when determining that the second instruction is not capable of being directly executed, the terminal device waits for the first instruction.

According to the method, the executable status of the second instruction is determined, so that the first instruction can be waited for when the second instruction is inaccurate or is not capable of being executed. This ensures response accuracy.

With reference to the first aspect, in a possible implementation, the determining an executable status of the second instruction includes:
The terminal device determines the executable status of the second instruction based on second decision-making information, where the second decision-making information includes at least one of the decision-making result of the previous round, the status identifier of the dialog of the previous round, an intent result of the current round determined by the server, and an instruction result of the current round determined by the server.

The decision-making result of the previous round indicates the source of the instruction executed for the dialog of the previous round, and the source includes the server and the terminal device. The status identifier indicates a single round or a plurality of rounds. The intent result indicates a new intent or a multi-round intent. The instruction result includes normality or abnormity, and the abnormity indicates that the operation corresponding to the speech signal is not capable of being performed.

With reference to the first aspect, in a possible implementation, the selecting a target instruction from the first instruction and the second instruction for execution includes:
The terminal device determines the target instruction from the first instruction and the second instruction based on third decision-making information.

The third decision-making information includes at least one of the decision-making result of the previous round, the status identifier of the dialog of the previous round, the intent result of the current round determined by the server, the instruction result of the current round determined by the server, the intent result of the current round determined by the terminal device, the instruction result of the current round determined by the terminal device, and the confidence level of the first instruction.

The decision-making result of the previous round indicates the source of the instruction executed for the dialog of the previous round, and the source includes the server and the terminal device. The status identifier indicates a single round or a plurality of rounds. The intent result indicates a new intent or a multi-round intent. The instruction result includes normality or abnormity, and the abnormity indicates that the operation corresponding to the speech signal is not capable of being performed.

With reference to the first aspect, in a possible implementation, the method further includes:
The terminal device sends a dialog status to the server, where the dialog status is used by the server to generate the second instruction, and the dialog status includes at least one of the decision-making result of the previous round and the status identifier of the dialog of the previous round.

In the method, the server may generate the second instruction based on dialog information (the decision-making result, the status identifier, and the like) of the previous round, to improve accuracy of the second instruction.

With reference to the first aspect, in a possible implementation, that the terminal device obtains a first instruction based on the speech signal includes:
The terminal device obtains an intent based on the speech signal; and
the terminal device determines the first instruction based on the intent.

With reference to the first aspect, in a possible implementation, that the terminal device obtains a first instruction based on the speech signal includes:
inputting the speech signal to a device-side model, to obtain an intent corresponding to the first instruction; and
the terminal device obtains the first instruction based on the intent corresponding to the first instruction.

With reference to the first aspect, in a possible implementation, the method further includes:
The terminal device trains the device-side model by using the speech signal and an intent corresponding to the second instruction as training samples.

In this embodiment of this application, the terminal device recognizes the intent of the speech signal based on the device-side model, and the terminal device may train the device-side model based on the result of the server, to improve a capability of generating a speech instruction by the terminal device.

With reference to the first aspect, in a possible implementation, the selecting a target instruction from the first instruction and the second instruction for execution includes:
the terminal device executes the target instruction; or the terminal device sends the target instruction to the server, where the server is configured to execute the target instruction.

According to a second aspect, an embodiment of this application provides a human-computer dialog method, applied to a server. The method includes:
The server receives a speech signal or a text of the speech signal from a terminal device, where the text of the speech signal is obtained by the terminal device based on the speech signal;
the server obtains a second instruction based on the speech signal;
the server sends the second instruction to the terminal device;
the server receives a target instruction from the terminal device, where the target instruction is obtained by the terminal device based on a first instruction and the second instruction, the target instruction is the first instruction or the second instruction, and the first instruction is obtained by the terminal device based on the speech signal; and
the server executes the target instruction.

According to a third aspect, this application provides an electronic device. The electronic device may include a memory and a processor. The memory may be configured to store a computer program. The processor may be configured to invoke the computer program, so that the electronic device performs the method according to the first aspect or any one of the possible implementations of the first aspect.

According to a fourth aspect, this application provides an electronic device. The electronic device may include a memory and a processor. The memory may be configured to store a computer program. The processor may be configured to invoke the computer program, so that the electronic device performs the method according to the second aspect or any one of the possible implementations of the second aspect.

According to a fifth aspect, this application provides a computer program product including instructions. When the computer program product runs on an electronic device, the electronic device is enabled to perform the method according to any one of the first aspect or the possible implementations of the first aspect.

According to a sixth aspect, this application provides a computer program product including instructions. When the computer program product runs on an electronic device, the electronic device is enabled to perform the method according to any one of the second aspect or the possible implementations of the second aspect.

According to a seventh aspect, this application provides a computer-readable storage medium, including instructions. When the instructions are run on an electronic device, the electronic device is enabled to perform the method according to any one of the first aspect or the possible implementations of the first aspect.

According to an eighth aspect, this application provides a computer-readable storage medium, including instructions. When the instructions are run on an electronic device, the electronic device is enabled to perform the method according to any one of the second aspect or the possible implementations of the second aspect.

According to a ninth aspect, an embodiment of this application provides a human-computer dialog system. The human-computer dialog system includes a terminal device and a server. The terminal device is the electronic device described in the third aspect, and the server is the electronic device described in the fourth aspect.

It may be understood that the electronic device according to the third aspect and the fourth aspect, the computer program product according to the fifth aspect and the sixth aspect, and the computer-readable storage medium according to the seventh aspect and the eighth aspect are all configured to perform the method provided in embodiments of this application. Therefore, for beneficial effect that can be achieved, refer to beneficial effect in the corresponding method. Details are not described herein again.

### BRIEF DESCRIPTION OF DRAWINGS

FIG. 1 is a diagram of an architecture of a human-computer dialog system according to an embodiment of this application;
FIG. 2 is a functional block diagram of a vehicle 002 according to an embodiment of this application;
FIG. 3 is a flowchart of a human-computer dialog method according to an embodiment of this application;
FIG. 4 is a schematic flowchart of a decision-making method according to an embodiment of this application;
FIG. 5 is a schematic flowchart of a decision-making method according to an embodiment of this application;
FIG. 6 is a schematic flowchart of a decision-making method in a case in which a vehicle obtains a first instruction according to an embodiment of this application;
FIG. 7 is a schematic flowchart of a decision-making method in a case in which a vehicle receives a second instruction from a server according to an embodiment of this application;
FIG. 8 shows another human-computer dialog method according to an embodiment of this application;
FIG. 9 is a diagram of a hardware structure of an electronic device 100 according to an embodiment of this application; and
FIG. 10 is a block diagram of a software structure of an electronic device 100 according to an embodiment of this application.

### DESCRIPTION OF EMBODIMENTS

The technical solutions according to embodiments of this application are clearly and completely described in the following with reference to the accompanying drawings. In descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language such as Java or an extensible markup language (extensible markup language, XML). Interface source code is parsed and rendered on an electronic device, and is finally presented as content that can be identified by the user. The user interface is usually represented in a form of a graphical user interface (graphical user interface, GUI), and is a user interface that is related to a computer operation and that is displayed in a graphic manner. The user interface may be a visual interface element, for example, a text, an icon, a button, a menu, a tab, a text box, a dialog box, a status bar, a navigation bar, or a Widget that is displayed on a display of the electronic device.

To describe a human-computer dialog method provided in embodiments of this application more clearly and in detail, the following first describes a human-computer dialog system provided in embodiments of this application.

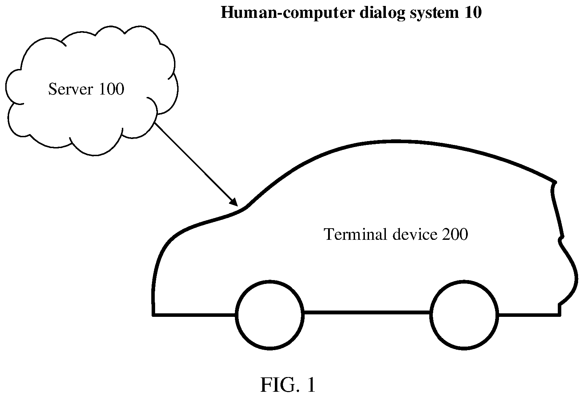

FIG. 1 is a diagram of an architecture of a human-computer dialog system according to an embodiment of this application.

As shown in FIG. 1, the human-computer dialog system 10 may include a server 100 and a terminal device 200. The server 100 may be a server deployed on a cloud. The terminal device 200 may be a vehicle (FIG. 1 shows an example in which the terminal device 200 is a vehicle).

The server 100 is a server having a speech recognition function. The server 100 in this embodiment of this application may be implemented by using an independent server or a server cluster including a plurality of servers.

The terminal device 200 may include but is not limited to a vehicle, a tablet, a display, a television, a desktop computer, a laptop computer, a handheld computer, a notebook computer, an ultra-mobile personal computer, a netbook, an augmented reality device, a virtual reality device, an artificial intelligence device, a vehicle-mounted device, a smart home device, and the like.

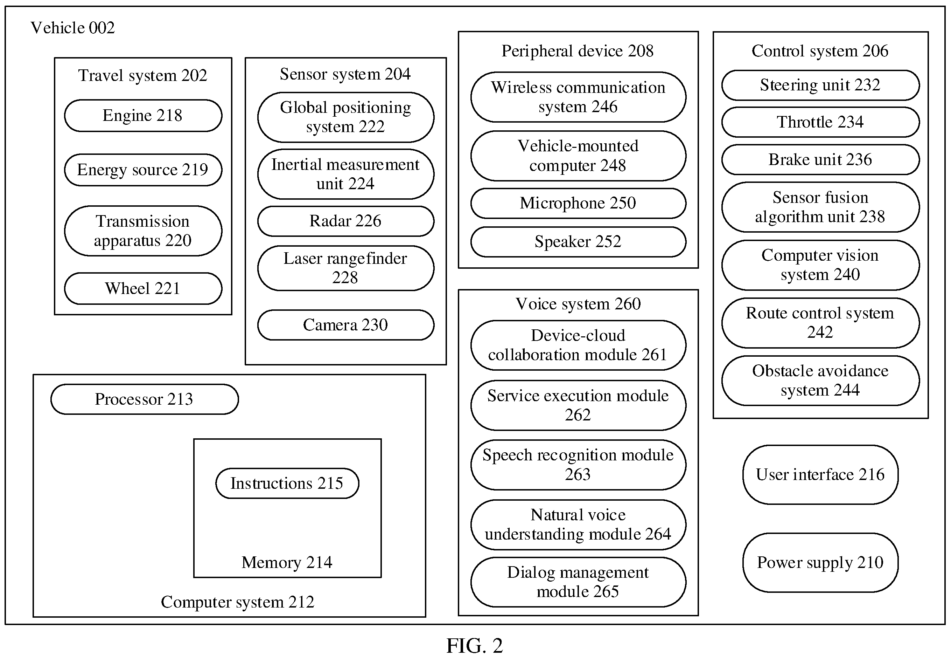

For example, the terminal device 200 in this embodiment of this application may be a vehicle 002 shown in FIG. 2. The vehicle 002 is a vehicle that senses a road environment by using a vehicle-mounted sensing system, automatically plans a traveling route, for controlling the vehicle to reach a predetermined destination. An intelligent vehicle is integrated with technologies such as a computer, modern sensing, information fusion, communication, artificial intelligence, and automatic control, and is a high-tech complex integrated with functions such as environment sensing, planning and decision-making, and multi-level driver assistance. The intelligent vehicle in this application may be an intelligent vehicle having an intelligent pilot that is mainly a computer system. The intelligent pilot is configured to enable the vehicle to implement unattended driving, or may be an intelligent vehicle having an auxiliary driving system or an automatic driving system, or may be a wheeled mobile robot, or the like.

In some embodiments, the terminal device 200 may perform speech recognition ASR on a received language signal by using a voice assistant, to obtain text information corresponding to the language signal; further perform semantic recognition on the received text information through natural language understanding, to obtain an intent obtained after the semantic recognition; and obtain, by using a dialog manager (Dialog Manager, DM), a task based on an input intent, determine information required by the task, then connect to a service platform to complete the task, or further require an input of more speech instruction information, or obtain service logic of the task corresponding to the service platform, and finally return an execution result to a user.

The voice assistant may be an embedded application (namely, a system application of the terminal device 200) in the terminal device 200, or may be a downloadable application. The embedded application is an application provided as a part of implementation of the terminal device 200 (for example, a vehicle). The downloadable application is an application that can provide an internet protocol multimedia subsystem (Internet Protocol Multimedia Subsystem, IMS) connection of the application. The downloadable application may be pre-installed in the terminal device 200, or may be a third-party application downloaded and installed by the user in the terminal device 200.

In this embodiment provided in this application, for a specific implementation of a process in which the server 100 and the terminal device 200 determine speech instructions (for example, a first instruction and a second instruction), refer to related descriptions in subsequent embodiments. Details are not described herein.

It may be understood that the architecture of the human-computer dialog system in FIG. 1 is merely an example implementation in embodiments of this application. An architecture of the human-computer dialog system in embodiments of this application includes but is not limited to the foregoing architecture of the human-computer dialog system.

Based on the foregoing architecture of the human-computer dialog system, an embodiment of this application provides the vehicle 002 used in the foregoing architecture of the human-computer dialog system. FIG. 2 is a functional block diagram of the vehicle 002 according to an embodiment of this application.

In an embodiment, the vehicle 002 may be configured to be in a full automated driving mode or a partial automated driving mode. For example, the vehicle 002 in an automated driving mode may control the vehicle 002, determine current statuses of the vehicle and an ambient environment of the vehicle through manual operations, determine a possible behavior of at least one other vehicle in the ambient environment, determine a confidence level corresponding to a possibility that the another vehicle performs the possible behavior, and control the vehicle 002 based on determined information. When the vehicle 002 is in the automated driving mode, the vehicle 002 may be configured to operate without interacting with a person.

The vehicle 002 may include various subsystems such as a travel system 202, a sensor system 204, a control system 206, one or more peripheral devices 208, a voice system 260, a power supply 210, a computer system 212, and a user interface 216. Optionally, the vehicle 002 may include more or fewer subsystems, and each subsystem may include a plurality of elements. In addition, all the subsystems and components of the vehicle 002 may be interconnected in a wired or wireless manner.

The voice system 260 may include a component that implements speech recognition for the vehicle 002. In an embodiment, the voice system 260 may include a device-cloud collaboration module 261, a service execution module 262, a speech recognition (ASR) module 263, a natural language understanding (NLU) module 264, and a dialog management (DM) module 265.

The device-cloud collaboration module 261 may perform configuration management, for example, update a configuration file, where the configuration file may include a decision-making rule; perform device-cloud decision-making, for example, determine, according to the decision-making rule, a target instruction from instructions generated by a server and the vehicle; perform device-cloud distribution, for example, send a received language signal to both the server and the speech recognition module 263; and perform timeout management, for example, when the vehicle 002 does not receive an instruction from the server within preset time, execute the instruction generated by the vehicle 002.

The speech recognition module 263 is configured to convert a speech signal into text information.

The natural language understanding module 264 is mainly configured to process a sentence input by the user or a speech recognition result, and extract a dialog intent of the user and information transmitted by the user. For example, if the user says "I want to eat lamb paomo", the NLU module may recognize that an intent of the user is "finding a restaurant", and that a key entity is "lamb paomo". The entity is a word that has a specific meaning or strong reference in a text, and usually includes a person name, a place name, an organization name, a date and time, a proper noun, and the like. For example, if there is no lamb paomo in a preset entity of the vehicle, the vehicle cannot recognize the lamb paomo as a food when recognizing the speech signal.

The dialog management module 265 is mainly configured to control a human-computer dialog process based on a result like an intent, a slot, or a key entity that are output by the NLU module, to update a system status and generate a corresponding system action. Specifically, the DM module may maintain a current dialog status based on a dialog history, where the dialog status may include an accumulated intent, slot, key entity set, and the like of the entire dialog history; and output a next dialog action based on the current dialog status. For example, the vehicle may generate a response text for a text obtained based on a voice.

For example, after the vehicle 002 receives a current speech signal, the speech recognition module may first convert the speech signal into corresponding text information. Further, the speech understanding module in the vehicle 002 may extract a user intent (intent) and slot (slot) information in the text information by using an NLU algorithm. For example, a user intent in the speech signal is navigation, and slot information in the speech signal is the Giant Wild Goose Pagoda. In this case, the dialog management module may request corresponding service content from a server of a related third-party application based on the extracted user intent and slot information. For example, the dialog management module may request, from a server of a Baidu map app, a navigation service whose destination is the Giant Wild Goose Pagoda. In this way, the server of the Baidu map app may send a navigation route whose destination is the Giant Wild Goose Pagoda to the vehicle 002, and a voice assistant app in the vehicle 002 may display the navigation route on a dialog interface in a form of a widget or the like, so that the voice assistant app completes a current response to the speech signal.

In addition, the voice system 260 may further include a text to speech (Text To Speech, TTS) module, an intelligent data service (IDS) module, a full-scene brain module, and the like. The TTS module may process a received voice stream, extract a voice feature of a user corresponding to the voice stream, and store the voice feature in a voice library, for example, may recognize a plurality of timbres and a child voice. The IDS module may store a dialog status and the like.

The travel system 202 may include a component that provides power for the vehicle 002 to move. In an embodiment, the travel system 202 may include an engine 218, an energy source 219, a transmission apparatus 220, and a wheel 221. The engine 218 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 218 converts the energy source 219 into mechanical energy.

Examples of the energy source 219 include gasoline, diesel, other petroleum-based fuels, propane, other compressed gas-based fuels, anhydrous alcohol, a photovoltaic module, a battery, and other power sources. The energy source 219 may also provide energy to another system of the vehicle 002.

The transmission apparatus 220 may transmit mechanical power from the engine 218 to the wheel 221. The transmission apparatus 220 may include a gearbox, a differential, and a drive shaft. In an embodiment, the transmission apparatus 220 may further include another device, for example, a clutch. The drive shaft may include one or more shafts that may be coupled to one or more wheels 221.

The sensor system 204 may include several sensors that sense information about an ambient environment of the vehicle 002. For example, the sensor system 204 may include a global positioning system 222 (the global positioning system may be a GPS system, a BeiDou system, or another positioning system), an inertial measurement unit (inertial measurement unit, IMU) 224, a radar 226, a laser rangefinder 228, and a camera 230. The sensor system 204 may further include sensors (for example, an in-vehicle air quality monitor, a fuel gauge, and an oil temperature gauge) of an internal system of the monitored vehicle 002. Sensor data from one or more of these sensors can be used to detect an object and corresponding features (a location, a shape, a direction, a speed, and the like) of the object. Such detection and recognition are key functions of a safe operation of the automated driving vehicle 002.

The global positioning system 222 may be configured to estimate a geographic location of the vehicle 002. The IMU 224 is configured to sense a location and an orientation change of the vehicle 002 based on an inertial acceleration. In an embodiment, the IMU 224 may be a combination of an accelerometer and a gyroscope. For example, the IMU 224 may be configured to measure a curvature of the vehicle 002.

The radar 226 may sense an object in the ambient environment of the vehicle 002 by using a radio signal. In some embodiments, in addition to sensing an object, the radar 226 may be further configured to sense a speed and/or a moving direction of the object.

The laser rangefinder 228 may sense, by using a laser, an object in an environment in which the vehicle 002 is located. In some embodiments, the laser rangefinder 228 may include one or more laser sources, a laser scanner, one or more detectors, and another system component.

The camera 230 may be configured to capture a plurality of images of the ambient environment of the vehicle 002. The camera 230 may be a static camera or a video camera, or may be a visible light camera or an infrared camera, or may be any camera configured to obtain an image. This is not limited in this embodiment of this application.

In this embodiment of this application, the camera 230 may be mounted on a front side, a rear side, a left side, or a right side of the vehicle 002, and the camera 230 may be a camera whose shooting angle is adjusted through rotation. In addition, the camera in this embodiment of this application may alternatively be mounted at any location on the intelligent vehicle by using a telescopic rod. When an image needs to be obtained, the telescopic rod is extended to obtain the image. When no image needs to be obtained, the telescopic rod is retracted. In this embodiment of this application, the camera 230 may be turned on and off based on an indication of a second working instruction received by a first vehicle, and perform shooting based on a shooting angle included in the second working instruction.

The control system 206 controls operations of the vehicle 002 and components of the vehicle 002. The control system 206 may include various elements, including a steering unit 232, a throttle 234, a braking unit 236, a sensor fusion algorithm unit 238, a computer vision system 240, a route control system 242, and an obstacle avoidance system 244.

The steering unit 232 is operable to adjust a traveling direction of the vehicle 002. For example, in an embodiment, the steering unit 232 may be a steering wheel system.

The throttle 234 is configured to control an operating speed of the engine 218, to further control a speed of the vehicle 002.

The braking unit 236 is configured to control the vehicle 002 to decelerate. The braking unit 236 may slow down the wheel 221 through friction. In another embodiment, the braking unit 236 may convert kinetic energy of the wheel 221 into a current. Alternatively, the braking unit 236 may reduce a rotational speed of the wheel 221 in another form, to control the speed of the vehicle 002.

The computer vision system 240 may operate to process and analyze the image captured by the camera 230, to recognize an object and/or a feature in the ambient environment of the vehicle 002. The object and/or the feature may include a traffic signal, a road boundary, and an obstacle. The computer vision system 240 may use an object recognition algorithm, a structure from motion (Structure from Motion, SFM) algorithm, video tracking, and other computer vision technologies. In some embodiments, the computer vision system 240 may be configured to draw a map for an environment, track an object, estimate a speed of an object, and the like.

The route control system 242 is configured to determine a traveling route of the vehicle 002. In some embodiments, the route control system 242 may determine the traveling route of the vehicle 002 with reference to data from the sensor fusion algorithm unit 238, the GPS 222, and one or more predetermined maps.

The obstacle avoidance system 244 is configured to recognize, evaluate, and avoid or otherwise bypass a potential obstacle in the environment of the vehicle 002.

Certainly, in an example, the control system 206 may additionally or alternatively include components other than those shown and described. Alternatively, some of the foregoing components may be removed.

The vehicle 002 interacts with an external sensor, another vehicle, another computer system, or a user by using the peripheral device 208. The peripheral device 208 may include a wireless communication system 246, a vehicle-mounted computer 248, a microphone 250, and/or a speaker 252.

In some embodiments, the peripheral device 208 provides a means for a user of the vehicle 002 to interact with the user interface 216. For example, the vehicle-mounted computer 248 may provide information for the user of the vehicle 002. The user interface 216 may further operate the vehicle-mounted computer 248 to receive an input of the user. The vehicle-mounted computer 248 may be operated by using a touchscreen. In another case, the peripheral device 208 may provide a means for the vehicle 002 to communicate with another device located in the vehicle. For example, the microphone 250 may receive an audio (for example, a voice command or another audio input) from the user of the vehicle 002. Likewise, the speaker 252 may output an audio to the user of the vehicle 002.

The wireless communication system 246 may wirelessly communicate with one or more devices directly or through a communication network, for example, code division multiple access (code division multiple access, CDMA), an enhanced versatile disk (Enhanced Versatile Disk, EVD) system, or a global system for mobile communications (global system for mobile communications, GSM)/general packet radio service (general packet radio service, GPRS), or 4G cellular communication such as long term evolution (long term evolution, LTE), or 5G cellular communication, or a new radio (new radio, NR) system, or a future communication system. The wireless communication system 246 may communicate with a wireless local area network (wireless local area network, WLAN) through Wi-Fi. In some embodiments, the wireless communication system 246 may directly communicate with a device by using an infrared link, Bluetooth, or a wireless personal area network (ZigBee). Other wireless protocols, for example, various vehicle communication systems such as the wireless communication system 246, may include one or more dedicated short range communications (dedicated short range communications, DSRC) devices, and these devices may include public and/or private data communication between vehicles and/or roadside stations.

The power supply 210 may provide power to various components of the vehicle 002. In an embodiment, the power supply 210 may be a rechargeable lithium-ion or lead-acid battery. One or more battery packs of such batteries may be configured as the power supply to supply power to the components of the vehicle 002. In some embodiments, the power supply 210 and the energy source 219 may be implemented together as those implemented together in some all-electric vehicles.

Some or all of functions of the vehicle 002 are controlled by the computer system 212. The computer system 212 may include at least one processor 213, and the processor 213 executes instructions 215 stored in a non-transient computer-readable medium like a memory 214. The computer system 212 may alternatively be a plurality of computing devices that control an individual component or a subsystem of the vehicle 002 in a distributed manner.

The processor 213 may be any conventional processor like a commercially available CPU. Alternatively, the processor may be a dedicated device like an ASIC or another hardware-based processor. Although FIG. 2 functionally illustrates a processor, a memory, and other elements of a computer in a same block, a person of ordinary skill in the art should understand that the processor, the computer, or the memory may actually include a plurality of processors, computers, or memories that may or may not be disposed in a same physical housing. For example, the memory may be a hard disk drive or another storage medium located in a housing different from that of the computer. Therefore, a reference to the processor or the computer is understood as including a reference to a set of processors, computers, or memories that may or may not operate in parallel. Different from using a single processor to perform the steps described herein, some components such as a steering component and a deceleration component may include respective processors. The processor performs only computation related to a component-specific function.

In various aspects described herein, the processor may be located far away from the vehicle and wirelessly communicate with the vehicle. In other aspects, some processes described herein are performed on a processor arranged in the vehicle and others are performed by a remote processor, including performing the necessary steps to perform a single manipulation.

In some embodiments, the memory 214 may include the instructions 215 (for example, program logic), and the instructions 215 may be executed by the processor 213 to perform various functions of the vehicle 002, including the functions described above. The memory 214 may also include additional instructions, including instructions for sending data to, receiving data from, interacting with, and/or controlling one or more of the travel system 202, the sensor system 204, the control system 206, and the peripheral device 208.

In addition to the instructions 215, the memory 214 may further store data, such as a road map, route information, and a location, a direction, a speed of the vehicle, and other such vehicle data, and other information. Such information may be used by the vehicle 002 and the computer system 212 when the vehicle 002 operates in an autonomous mode, a semi-autonomous mode, and/or a manual mode. For example, a current speed and a current curvature of the vehicle may be slightly adjusted based on road information of a target road segment and a received vehicle speed range and vehicle curvature range, so that the speed and the curvature of the intelligent vehicle fall within the vehicle speed range and the vehicle curvature range.

The user interface 216 is configured to provide information to or receive information from the user of the vehicle 002. Optionally, the user interface 216 may include one or more input/output devices within a set of peripheral devices 208, such as the wireless communication system 246, the vehicle-mounted computer 248, the microphone 250, and the speaker 252.

The computer system 212 may control the functions of the vehicle 002 based on inputs received from various subsystems (for example, the travel system 202, the sensor system 204, and the control system 206) and the user interface 216. For example, the computer system 212 may control, by using an input from the control system 206, the steering unit 232 to avoid obstacles detected by the sensor system 204 and the obstacle avoidance system 244. In some embodiments, the computer system 212 may be operated to control the vehicle 002 and subsystems of the vehicle in many aspects.

Optionally, one or more of the foregoing components may be installed separately from or associated with the vehicle 002. For example, the memory 214 may exist partially or completely separate from the vehicle 002. The foregoing components may be communicatively coupled together in a wired and/or wireless manner.

Optionally, the foregoing components are only examples. In actual application, components in the foregoing modules may be added or deleted based on an actual requirement. FIG. 2 should not be understood as a limitation on embodiments of this application.

An automated driving vehicle traveling on a road, for example, the vehicle 002, may recognize an object in an ambient environment of the automated driving vehicle, to determine to adjust a current speed. The object may be another vehicle, a traffic control device, or another type of object. In some examples, each recognized object may be considered independently, and based on features of each object, such as a current speed of the object, an acceleration of the object, and a spacing between the object and the vehicle, may be used to determine the speed to be adjusted by the automated driving vehicle.

Optionally, the automated driving vehicle 002 or a computing device associated with the automated driving vehicle 002 (for example, the computer system 212, the computer vision system 240, or the memory 214 in FIG. 2) may predict a behavior of the recognized object based on a characteristic of the recognized object and a status of an ambient environment (for example, traffic, rain, or ice on a road). Optionally, all recognized objects depend on a behavior of each other. Therefore, all the recognized objects may be alternatively jointly considered to predict behavior of a single recognized object. The vehicle 002 can adjust the speed of the vehicle 002 based on the predicted behavior of the recognized object. In this process, another factor may also be considered to determine the speed of the vehicle 002, for example, a lateral location of the vehicle 002 on a road on which the vehicle 002 travels, a curvature of the road, and proximity between a static object and a dynamic object.

In addition to providing an instruction for adjusting the speed of the automated driving vehicle, the computing device may provide an instruction for modifying a steering angle of the vehicle 002, so that the automated driving vehicle can follow a given track and/or maintain a safe horizontal distance and a safe vertical distance from an object (for example, a car on a neighboring lane of the road) near the automated driving vehicle.

The vehicle 002 may be a car, a truck, a motorcycle, a bus, a boat, a plane, a helicopter, a lawn mower, a recreational vehicle, an amusement park vehicle, a construction device, a tram, a golf cart, a train, a trolley, or the like. This is not specifically limited in this embodiment of this application.

It may be understood that the functional diagram of the intelligent vehicle in FIG. 2 is merely an example implementation in embodiments of this application. An intelligent vehicle in embodiments of this application includes but is not limited to the foregoing structure.

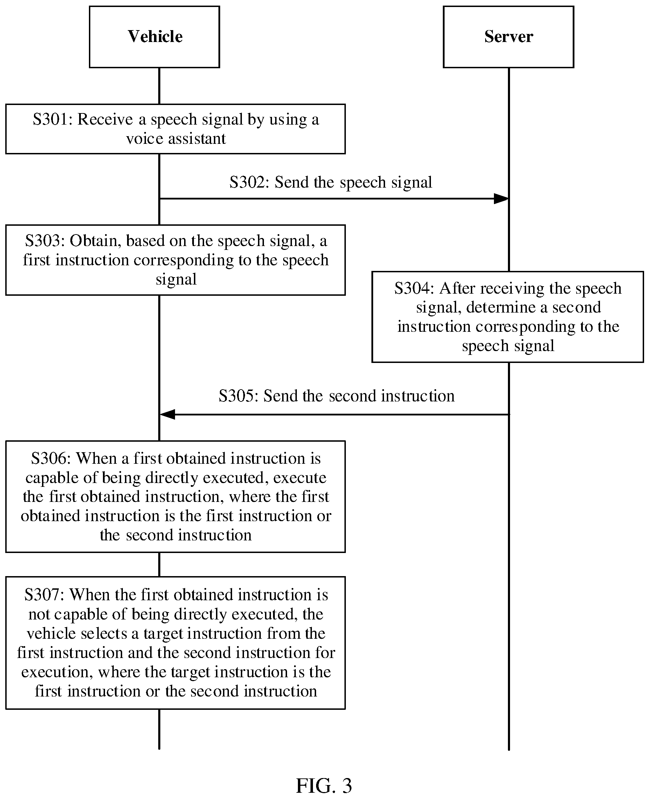

FIG. 3 is a flowchart of a human-computer dialog method according to an embodiment of this application. The method may be applied to the human-computer dialog system in FIG. 1. The server 100 may be configured to: support and perform step S304 and step S305 in the method procedure shown in FIG. 3, and the terminal device 200 may be configured to: support and perform step S301 to step S303 and step S306 in the method procedure shown in FIG. 3. The method may include some or all of the following steps.

FIG. 3 is a flowchart of a human-computer dialog method according to an embodiment of this application. The human-computer dialog method may include some or all of the following steps.

### S301: A vehicle receives a speech signal by using a voice assistant.

The voice assistant may be an application (Application, APP) installed in the vehicle, or may be a system function integrated in an operating system of the vehicle. The voice assistant may be an embedded application (namely, a system application in the vehicle) or a downloadable application in the vehicle. The embedded application is an application provided as a part of an implementation of the vehicle. For example, the embedded application may be Settings, Messages, or Camera. The downloadable application is an application that can provide an internet protocol multimedia subsystem (Internet Protocol Multimedia Subsystem, IMS) connection of the application. The downloadable application may be an application pre-installed in the terminal, or may be a third-party application that is downloaded by the user and that is installed in the terminal.

In some embodiments, after the voice assistant is started, a speech command input by a user may be received by using a microphone, to trigger the vehicle to perform an operation corresponding to the speech command. The speech signal in this embodiment of this application is a speech command. For example, after the user wakes up the voice assistant of the vehicle in the vehicle, the user may say "turn on the air conditioner". In this case, "turn on the air conditioner" is a speech command. After receiving the speech command, the voice assistant may turn on the air conditioner in the vehicle.

S302: The vehicle sends the speech signal to a server.

In some embodiments, when receiving the speech signal, the vehicle sends the speech signal to the server. In addition, the vehicle may perform S303 to determine a first instruction corresponding to the speech signal.

Optionally, the vehicle may further send a dialog status to the server, where the dialog status is used by the server to obtain a second instruction. The dialog status may include dialog information of first N rounds of a dialog of a current round and decision-making results of N rounds, and may further include a to-be-filled slot of the dialog of the current round, where N is a positive integer. A decision-making result of a round indicated whether an operation corresponding to a speech signal of the round is to use an instruction generated by the server or an instruction generated by the vehicle. For example, the dialog status may include information such as dialog intents of a latest plurality of rounds, a slot (key), a slot value (value), a to-be-filled slot of a current round, and a user question. It may be understood that the vehicle sends the dialog status to the server, and the server may generate a speech instruction of the current round with reference to decision-making results of previous rounds. It should be noted that, because the vehicle makes a decision, a cloud does not know a decision-making result of a previous round. If the decision-making result is not uploaded to the server, an error may be caused to the server in decision-making of a current round. For example, a dialog of a previous round is "User: Buy an air ticket from Shanghai to Beijing for me", and a dialog of a current round is "User: What is the weather like there?". If the server does not have information about the dialog of the previous round, the server cannot determine an address indicated by "there" said by the user in the dialog of the current round.

In an implementation, the vehicle is provided with the voice assistant. After receiving the speech signal, a device-cloud collaboration module in the voice assistant may send the speech signal to both an ASR module in the voice assistant and the server. Alternatively, after receiving the speech signal, a device-cloud collaboration module invokes an ASR interface to perform text conversion on the speech signal while sending the language signal to the server.

### S303: The vehicle obtains, based on the speech signal, the first instruction corresponding to the speech signal.

In some embodiments, the vehicle first converts the language signal into text information, then performs semantic recognition on the text information, to obtain an intent through the semantic recognition, and finally obtains the first instruction based on the intent. The first instruction indicates an operation corresponding to the speech signal.

For example, after receiving the speech signal, the vehicle may convert the speech signal into the corresponding text information by using a speech recognition (ASR) algorithm, to obtain "What is the weather like tomorrow". Further, the vehicle may extract the user intent from the text information of the speech signal by using an NLU algorithm. To be specific, the vehicle may extract, from "What is the weather like tomorrow", the user intent corresponding to the speech signal: querying the weather of tomorrow. Further, the vehicle may generate, based on the user intent, the first instruction corresponding to the speech signal. Content of the first instruction may be "invoking a weather application to obtain a weather condition of tomorrow and displaying the weather condition of tomorrow by using a widget".

Optionally, the vehicle may further determine a first dialog status of the current round based on the speech signal. The first dialog status may include indication information indicating that the dialog of the current round is a multi-round dialog or a single-round dialog, and may further include a historical intent, text, and entity, an intent, a text, and an entity of the current round, and the like.

In an implementation, the voice assistant includes the device-cloud collaboration module, the ASR module, an NLU module, and a DM module. In this case, the device-cloud collaboration module sends the speech signal to the ASR module. After the ASR module obtains the text information corresponding to the language signal, the NLU module recognizes the intent based on the text information. Finally, the DM module obtains the first instruction and the first dialog status. Further, the DM module may send the first instruction and the first dialog status to the device-cloud collaboration module, and the device-cloud collaboration module determines whether to use the first instruction, that is, performs step S306.

In another implementation, the voice assistant does not have the ASR module, an NLU module, or a DM module, and the voice assistant may invoke functions of an ASR plug-in, an NLU plug-in, a DM plug-in, and the like to obtain the first instruction based on the speech signal.

### S304: After receiving the speech signal, the server determines the second instruction corresponding to the speech signal.

In some embodiments, the server first converts the language signal into the text information, then performs semantic recognition on the text information, to obtain an intent through the semantic recognition, and finally obtains the second instruction based on the intent. The second instruction indicates the operation corresponding to the speech signal.

Optionally, the server may further determine a second dialog status based on the speech signal. The second dialog status may include indication information indicating that the dialog of the current round is a multi-round dialog or a single-round dialog, and may further include reply information of the speech signal. It should be noted that both the first dialog status and the second dialog status may further include an accumulated intent, slot, key entity set, and the like in an entire dialog history.

In an implementation, the server has the ASR module, the NLU module, and the DM module. After receiving the speech signal, the server sends the speech signal to the ASR module. After the ASR module obtains the text information corresponding to the language signal, the NLU module recognizes the intent based on the text information. Finally, the DM module obtains the second instruction and the second dialog status.

### S305: The server sends the second instruction to the vehicle.

In some embodiments, the server obtains the second instruction based on the speech information, and sends the second instruction to the vehicle.

Optionally, the server sends the second dialog status to the vehicle.

In an implementation, after the server obtains the second instruction and the second dialog status by using the DM module, the server may send the second instruction and the second dialog status to the vehicle, and the vehicle determines whether to use the second instruction, that is, performs step S306.

### S306: When a first obtained instruction is capable of being directly executed, the vehicle executes the first obtained instruction, where the first obtained instruction is the first instruction or the second instruction.

In some embodiments, when determining that the first obtained instruction is capable of being directly executed, the vehicle executes the first obtained instruction, and does not execute a later obtained instruction. For example, when obtaining the first instruction, the vehicle queries whether the second instruction arrives. If the second instruction does not arrive, that is, the vehicle does not receive the second instruction, the first instruction is the first obtained instruction. Further, the vehicle determines whether the first instruction is capable of being directly executed, and the vehicle executes the first instruction when determining that the first instruction is capable of being directly executed. Further, when obtaining the second instruction, the vehicle discards the second instruction, that is, does not execute the second instruction. It may be understood that, when the first obtained instruction is the first instruction, the later obtained instruction is the second instruction; and when the first obtained instruction is the second instruction, the later obtained instruction is the first instruction.

In an implementation, if the first obtained instruction is the first instruction, the vehicle may determine, based on first decision-making information, whether the first instruction is capable of being directly executed. The first decision-making information may include any one of the decision-making result of the previous round, a status identifier of the dialog of the previous round, a device-side intent result of the current round, a device-side instruction result of the current round, and a device-side confidence level. The device-side intent result of the current round is an intent result of the current round determined by the vehicle. The device-side instruction result of the current round is an instruction result of the current round determined by the vehicle. The device-side confidence level is a confidence level of the first instruction. The decision-making result of the previous round indicates a source of an instruction executed for the dialog of the previous round, and the source includes the server and a terminal device. The status identifier indicates a single round or a plurality of rounds. The intent result indicates a new intent and a multi-round intent. The instruction result includes normality or abnormity, and the abnormity indicates that the operation corresponding to the speech signal is not capable of being performed.

When the instruction result is abnormal, the following may be included: A vertical field corresponding to the first instruction is a non-closed-loop vertical field. In other words, the vehicle does not support execution of the first instruction. The vertical field is a functional field, for example, a field like vehicle control, music playing, or weather querying. For example, the first instruction is weather querying. Because the weather querying is a non-closed-loop vertical field, an instruction result of the first instruction is abnormal.

Optionally, the first decision-making information may further include a vertical field corresponding to the first instruction, and the vertical field may include a closed-loop vertical field and a non-closed-loop vertical field.

The device-side confidence level may be obtained by using the following method: The vehicle may obtain a first confidence level based on an ASR recognition result, and obtain a second confidence level based on an NLU recognition result; and the vehicle may use the first confidence level or the second confidence level as the device-side confidence level, or may obtain the device-side confidence level based on the first confidence level and the second confidence level, for example, obtain the device-side confidence level by performing weighted summation on the first confidence level and the second confidence level.

For example, when each of the decision-making result of the previous round, the status identifier of the dialog of the previous round, the device-side intent result of the current round, and the device-side instruction result of the current round meets a preset condition, the vehicle may determine that the first instruction is capable of being directly executed. The preset condition may be: when the decision-making result of the previous round is the vehicle, the status identifier of the dialog of the previous round indicates a plurality of rounds, the device-side intent result of the current round is a multi-round result, and the device-side instruction result of the current round is normal, determining that the first instruction is capable of being executed.

For another example, the first decision-making information is the device-side confidence level, and the preset condition is: when the device-side confidence level is greater than a preset value, determining that the first instruction is capable of being directly executed.

For example, the vehicle determines that the status identifier of the dialog of the previous round indicates a plurality of rounds, that the intent result of the current round obtained by the vehicle is a new intent, for example, a vehicle control intent, and that an intent result of the current round obtained by the server is a multi-round intent. In this case, if the vehicle determines that the decision-making result of the previous round is the server, the vehicle may determine that the second instruction is a target instruction.

In an implementation, if the first obtained instruction is the second instruction, the vehicle may determine, based on second decision-making information, whether the second instruction is capable of being directly executed. The second decision-making information may include any one of the decision-making result of the previous round, the status identifier of the dialog of the previous round, a cloud-side intent result of the current round, a cloud-side instruction result of the current round, and the cloud-side confidence level. The cloud-side intent result of the current round is an intent result the current round determined by the server. The cloud-side instruction result of the current round is an instruction result of the current round determined by the server.

The preset condition is a decision-making rule. The decision-making rule may be stored in the device-cloud collaboration module 261 shown in FIG. 2, and may be specifically stored in a configuration file in the device-cloud collaboration module 261. Further, when the user needs to update the decision-making rule, the user only needs to update the configuration file.

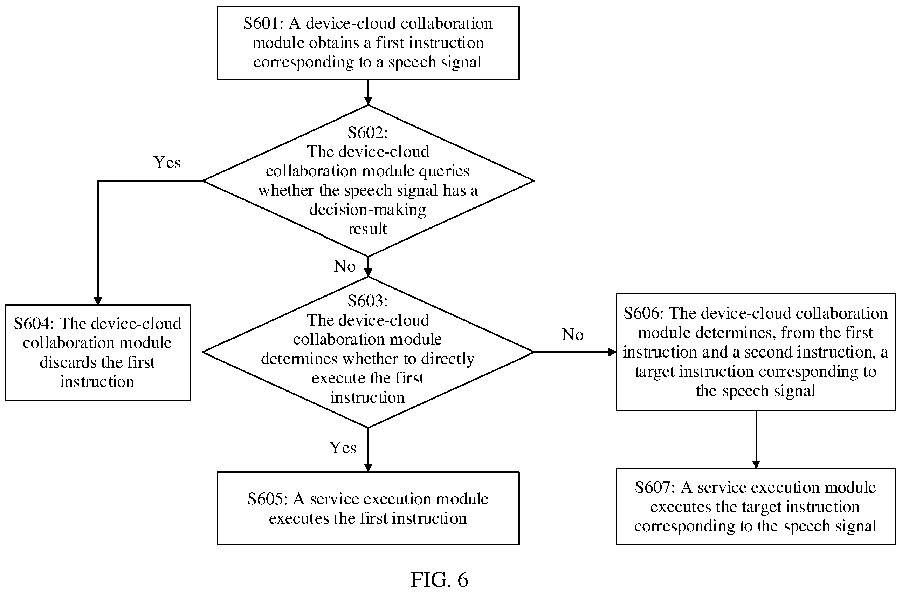

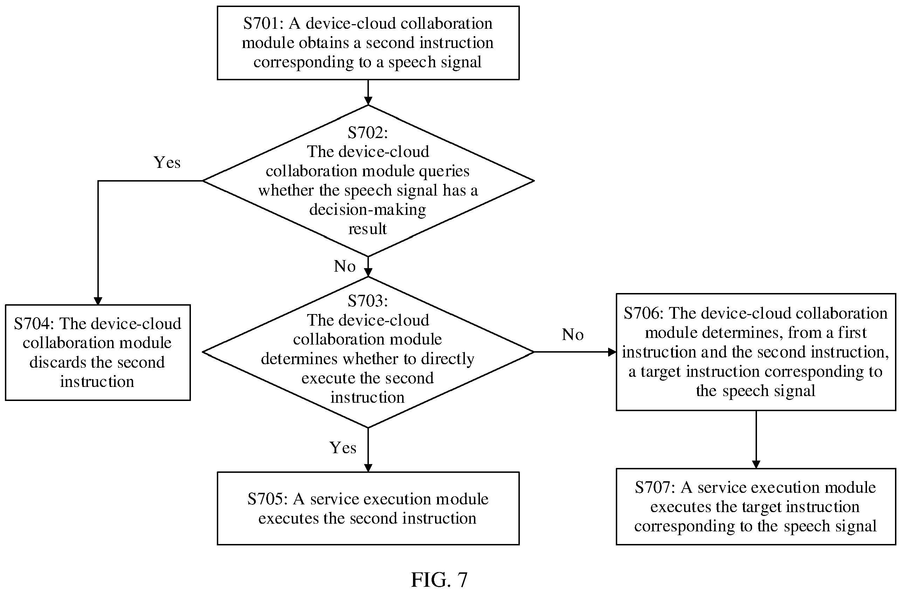

For a specific implementation in which the vehicle determines whether an instruction is capable of being directly executed, refer to related descriptions in the embodiments in FIG. 6 and FIG. 7.

Optionally, after executing the first obtained instruction, the vehicle may store the first obtained instruction and a dialog status corresponding to the instruction. Further, when uploading a next speech signal to the server, the vehicle may upload the first obtained instruction and the dialog status corresponding to the instruction to the server. For example, the first obtained instruction is the first instruction, and the dialog status corresponding to the instruction is the first dialog status. In this case, if the vehicle receives the next speech signal after executing the first instruction, the vehicle may upload the first instruction and the first dialog status to the server when uploading the next speech signal to the server.

Optionally, after executing the first obtained instruction, the vehicle may write the executable status into storage. The executable status may include: The operation corresponding to the speech signal is executed or the first obtained instruction is executed, so that the vehicle does not execute the later obtained instruction when obtaining the later obtained instruction. The storage may be a public queue. For example, if the first obtained instruction is the first instruction, and the later obtained instruction is the second instruction, after executing the first instruction, the vehicle may update, to "executed", a status field that is in the public queue and that indicates a decision-making result corresponding to the speech signal.

### S307: When the first obtained instruction is not capable of being directly executed, the vehicle selects the target instruction from the first instruction and the second instruction for execution, where the target instruction is the first instruction or the second instruction.

In some embodiments, when determining that the first obtained instruction is not capable of being directly executed, the vehicle waits for another instruction. After the vehicle receives the another instruction, the vehicle determines the target instruction from the first instruction and the second instruction. Finally, the vehicle or the server executes the target instruction.

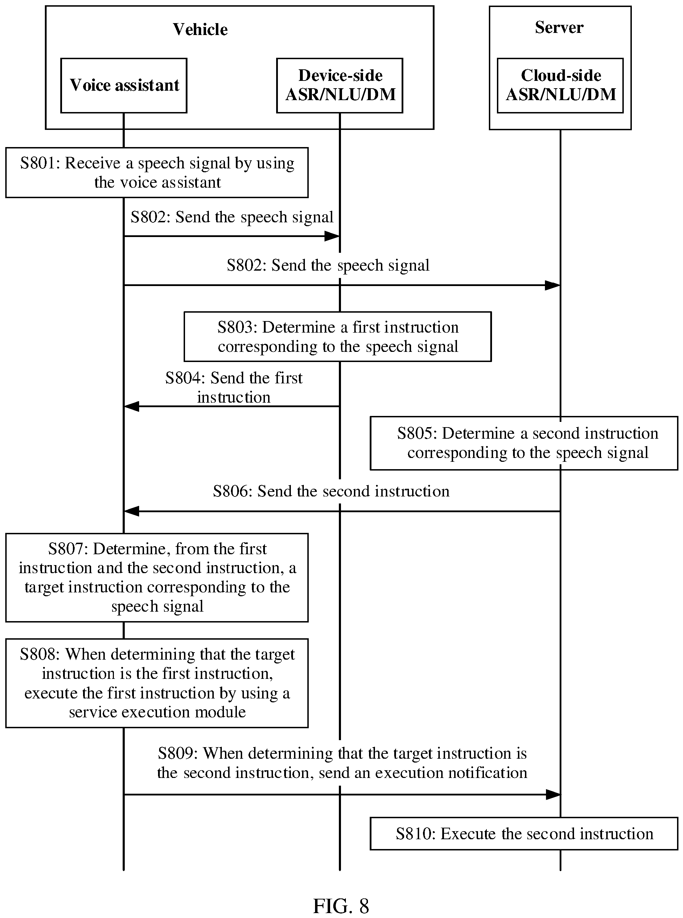

For example, when the vehicle does not have a function of executing the target instruction, if the target instruction is "turn on the air conditioner at home", the vehicle may send the target instruction to the server, and the server executes the target instruction. For a specific implementation of executing the target instruction by the server, refer to related content in FIG. 8.

It should be noted that, when the first obtained instruction is the first instruction, the another instruction is the second instruction, and when the first obtained instruction is the second instruction, the another instruction is the first instruction.

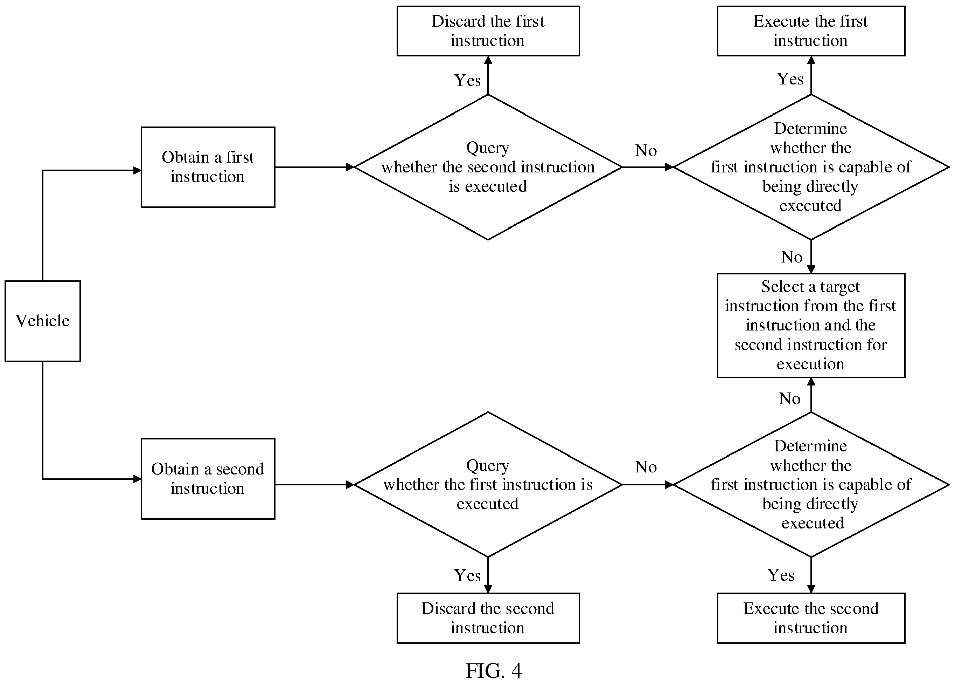

For example, when obtaining the another instruction, the vehicle may first determine whether the another instruction is capable of being directly executed. When the another instruction is capable of being directly executed, the vehicle executes the another instruction, that is, determines the another instruction as the target instruction. When the other instruction is not capable of being executed, the target instruction is selected from the first instruction and the second instruction for execution. For another example, the vehicle may mark the first obtained instruction as waiting, and further determine the target instruction from the first instruction and the second instruction when obtaining the another instruction. For specific implementations of the foregoing two examples, refer to the following related descriptions in FIG. 4 to FIG. 7.

In some embodiments, the device-cloud collaboration module may determine, from the second instruction and the first instruction based on third decision-making information, the target instruction corresponding to the speech signal. The third decision-making information may include the decision-making result of the previous round, the status identifier of the dialog of the previous round, the device-side intent result of the current round, the device-side instruction result of the current round, the cloud-side intent result of the current round, and the cloud-side instruction result of the current round. The third decision-making information may further include the device-side confidence level and the cloud-side confidence level.

Optionally, after executing the target instruction, the vehicle may store the target instruction and a dialog status corresponding to the target instruction. Further, when uploading the next speech signal to the server, the vehicle upload the target instruction and the dialog status corresponding to the target instruction to the server. For example, the target instruction is the first instruction, and the dialog status corresponding to the target instruction is the first dialog status. In this case, if the vehicle receives the next speech signal after executing the first instruction, the vehicle may upload the first instruction and the first dialog status to the server when uploading the next speech signal to the server.

Optionally, after executing the target instruction, the vehicle may write an executable status of the speech signal into the storage. The executable status may include: The operation corresponding to the speech signal is executed or the target instruction is executed, so that the vehicle does not execute the another instruction when obtaining the another instruction. The storage may be a public queue. For example, if the target instruction is the first instruction, and the another instruction is the second instruction, after executing the first instruction, the vehicle may update, to "executed", the status field that is in the public queue and that indicates the decision-making result corresponding to the speech signal. It may be understood that when the target instruction is the first instruction, the another instruction is the second instruction; and when the target instruction is the second instruction, the another instruction is the first instruction.

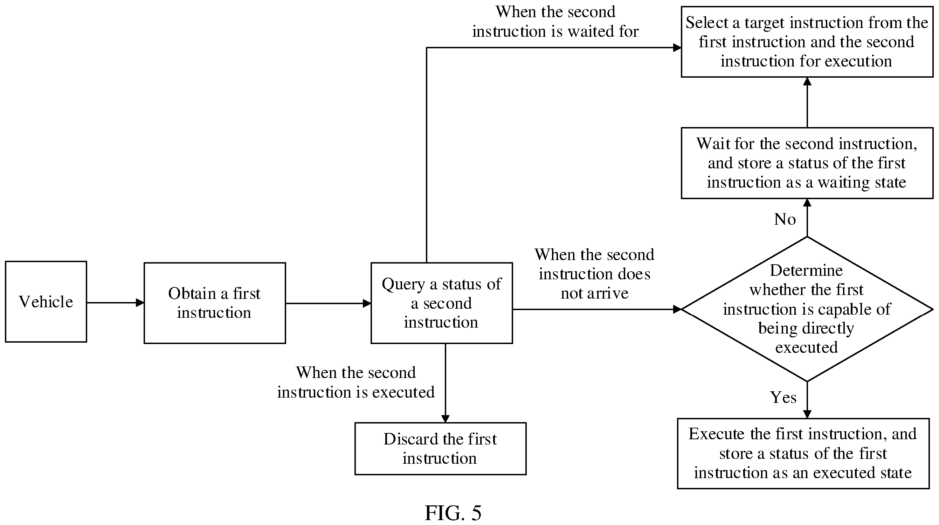

In step S306 and step S307, decision-making logic may be different when the vehicle makes a decision on an obtained instruction. The following uses FIG. 4 and FIG. 5 as examples to describe a decision-making method used when the vehicle makes the decision on the obtained instruction.

FIG. 4 is a schematic flowchart of a decision-making method according to an embodiment of this application.

As shown in FIG. 4, when obtaining the first instruction, the vehicle may query whether the second instruction is executed. When determining that the second instruction is executed, the vehicle may discard the first instruction, that is, not execute the first instruction. When determining that the second instruction is not executed, the vehicle may determine whether the first instruction is capable of being directly executed. When determining that the first instruction is capable of being directly executed, the vehicle executes the first instruction. When determining that the first instruction cannot be executed, the vehicle waits for an executable status of the second instruction. When the second instruction is capable of being directly executed, the vehicle discards the first instruction. When the second instruction is not capable of being directly executed, the vehicle selects the target instruction from the first instruction and the second instruction for execution.

When obtaining the second instruction, the vehicle may query whether the first instruction is executed. When determining that the first instruction is executed, the vehicle may discard the second instruction, that is, not execute the second instruction. When determining that the first instruction is not executed, the vehicle may determine whether the second instruction is capable of being directly executed. When determining that the second instruction is capable of being directly executed, the vehicle executes the second instruction. When determining that the second instruction cannot be executed, the vehicle waits for an executable status of the first instruction. When the first instruction is capable of being directly executed, the vehicle discards the second instruction. When the first instruction is not capable of being directly executed, the vehicle selects the target instruction from the second instruction and the first instruction for execution.

FIG. 5 is a schematic flowchart of a decision-making method according to an embodiment of this application. FIG. 5 is described by using an example in which the vehicle obtains the first instruction. A decision-making method used when the vehicle obtains the second instruction is the same as a decision-making method used when the vehicle obtains the first instruction. Details are not described herein.

As shown in FIG. 5, after obtaining the first instruction, the vehicle may query a status of the second instruction. The status of the second instruction may include an executed state, a non-arrival state, and a waiting state. When the status of the second instruction is the executed state, the vehicle may discard the first instruction, that is, not execute the first instruction. When the status of the second instruction is the non-arrival state, the vehicle may determine whether the first instruction is capable of being directly executed. When the first instruction is capable of being directly executed, the vehicle executes the first instruction. When the first instruction is not capable of being directly executed, the vehicle waits for the second instruction and stores a status of the first instruction as a waiting state until the vehicle receives the second instruction, and then selects the target instruction from the first instruction and the second instruction for execution. When the status of the second instruction is the waiting state, the vehicle selects the target instruction from the first instruction and the second instruction for execution.

It can be learned that, in the decision-making method shown in FIG. 4, a comprehensive decision-making solution based on the first instruction and the second instruction is used only when neither the first instruction nor the second instruction is capable of being directly executed. However, in the decision-making method shown in FIG. 5, when an instruction from one end arrives, the vehicle queries whether an instruction from a peer end is in a waiting state. If the instruction from the peer end is in the waiting state, the vehicle selects the target instruction from the first instruction and the second instruction for execution. It may be understood that, in comparison with the method shown in FIG. 4, in the method shown in FIG. 5, a comprehensive solution based on the first instruction and the second instruction for decision-making is preferentially selected. Because more data is used for decision-making in the comprehensive solution, decision-making accuracy of the comprehensive solution is higher. Therefore, the method in FIG. 5 can improve decision-making accuracy. It should be noted that, when the instruction from one end is the first instruction, the instruction from the peer end is the second instruction, and when the instruction from one end is the second instruction, the instruction from the peer end is the first instruction.

In this embodiment of this application, the vehicle may further perform self-learning based on a recognition result of a server. In other words, after performing step S306 or step S307, the vehicle may further perform step S308.

S308: When the first instruction and the second instruction are different, the vehicle optimizes an instruction recognition capability of the vehicle based on the second instruction.

In some embodiments, when determining that the first instruction and the second instruction are different, the vehicle may optimize the instruction recognition capability of the vehicle based on the second instruction. Alternatively, when the first instruction and the second instruction are different and meet a preset condition, the vehicle may optimize the instruction recognition capability of the vehicle based on the second instruction. The preset condition may include: when the device-side confidence level of the first instruction is lower than a preset threshold, and when the second instruction is the target instruction, determining that the second instruction is more accurate than the first instruction. For example, after the vehicle first obtains the first instruction and executes the first instruction, when receiving the second instruction, the vehicle determines that the second instruction is more accurate than the first instruction. In this case, the vehicle may optimize the instruction recognition capability of the vehicle based on the second instruction and the speech signal.

In an implementation, the first instruction is obtained by the vehicle based on a device-side model and the speech signal. In this case, when determining that the first instruction and the second instruction are different, the vehicle uses the speech signal and the second instruction as training samples to train the device-side model, to continuously supplement a device-cloud capability difference. The second instruction may include a text, an intent, and an entity. The device-side model may include an ASR model and an NLU model. For example, the vehicle may obtain the text and the intent from the second instruction. Further, the vehicle may train the ASR model based on the speech signal and the text, and train the NLU model based on the intent and the text.

The device-side model may be a speech recognition module obtained through training based on an initial speech signal and an initial hot entity. An original popular entity is preset in the device-side model. For example, for Music, an initial preset entity includes top 10,000 singers and song names.

In another implementation, the vehicle may increase a quantity of preset entities in the vehicle based on the second instruction. For example, speech content corresponding to the speech signal is playing a song A, A is a name of the song, and A is an entity. It may be understood that if there is no A in the preset entity of the vehicle, the vehicle cannot recognize a meaning represented by A when recognizing the speech signal.

For example, when the second instruction hits the entity and the device-side preset entity does not include the hit entity, the vehicle may load the hit entity to the preset entity. For example, if the second instruction hits the entity, that is, the server recognizes that the speech signal of the user requires to play A, and if the vehicle does not find A in the preset entity, the vehicle may load the entity A to the preset entity when determining that the second instruction hits the entity A.

In still another implementation, the second instruction includes a text, an entity, and an intent. The vehicle may store a correspondence between the text, the entity, and the intent, so that the vehicle directly obtains the intent and the entity when the obtained text information corresponding to the speech signal matches the text.

The following uses FIG. 6 and FIG. 7 as examples to describe in detail the decision-making method in step S306.

In some embodiments, the vehicle obtains the first instruction and the second instruction at different time. In this case, when obtaining either the first instruction or the second instruction, the vehicle may first determine whether to execute the instruction. When determining that the instruction is not capable of being directly executed, the vehicle waits to obtain the other one of the first instruction and the second instruction, and then determines, from the two instructions, the target instruction corresponding to the speech signal.

FIG. 6 is an example of a schematic flowchart of a decision-making method in a case in which the vehicle obtains the first instruction. As shown in FIG. 6, the decision-making method may include some or all of the following steps.

### S601: The device-cloud collaboration module obtains the first instruction corresponding to the speech signal.

The device-cloud collaboration module is deployed in the voice assistant of the vehicle, and may receive the first instruction sent by the DM module in the voice assistant, or may receive the first instruction obtained by the voice assistant by invoking the DM plug-in.

### S602: The device-cloud collaboration module queries whether the speech signal has a decision-making result.

If the speech signal has a decision-making result, it is indicated that the operation corresponding to the speech signal is performed. If the speech signal has no decision-making result, it is indicated that the operation corresponding to the speech signal is not performed. In other words, after obtaining the first instruction, the device-cloud collaboration module first queries whether the operation corresponding to the speech signal is performed. The decision-making result indicates whether the operation corresponding to the speech signal is to execute the instruction (namely, the second instruction) generated by the server or the instruction (namely, the first instruction) generated by the vehicle. The decision-making result may be the first instruction or the second instruction, or may be the server or the vehicle. It may be understood that the decision-making result is the vehicle, that is, the target instruction corresponding to the speech signal is the first instruction, and the decision-making result is the server, that is, the target instruction corresponding to the speech signal is the second instruction.

In some embodiments, after obtaining the first instruction, the device-cloud collaboration module may query, from the storage, whether the speech signal has the decision-making result. For example, the device-cloud collaboration module writes the decision-making result of the speech signal into the public queue. In this case, after obtaining the first instruction, the device-cloud collaboration module may read the status field that is in the public queue and that indicates the decision-making result, to determine whether the speech signal has the decision-making result. For example, when receiving the first instruction sent by the DM module, the device-cloud collaboration module reads the status field in the public queue, to determine whether the speech signal has the decision-making result.

Further, when finding, through querying, that the speech signal has no decision-making result, the device-cloud collaboration module may perform step S603, that is, further determine whether the first instruction is capable of being directly executed. When finding, through querying, that the speech signal has the decision-making result, the device-cloud collaboration module may perform step S604, that is, discard the first instruction. It may be understood that, if the device-cloud collaboration module first obtains the second instruction, decides that the second instruction is the target instruction, and executes the target instruction, the device-cloud collaboration module may discard the first instruction when obtaining the first instruction, to avoid repeatedly performing the operation corresponding to the speech signal.

Optionally, the public queue may further include an instruction identifier. For example, when obtaining the first instruction, the device-cloud collaboration module may write, into the public queue, an instruction identifier indicating that the first instruction is obtained; and when obtaining the second instruction, the device-cloud collaboration module may write, into the public queue, an instruction identifier indicating that the second instruction is obtained.

In some other embodiments, when obtaining the first instruction or the second instruction, the device-cloud collaboration module may store, in the storage, an instruction identifier indicating that the instruction is obtained. The storage may be the foregoing public queue. In this case, when obtaining the first instruction, the device-cloud collaboration module may first query the instruction identifier to determine whether the second instruction is obtained. When finding, through querying, that the device-cloud collaboration module does not receive the second instruction from the server, the device-cloud collaboration module may perform step S603. When finding, through querying, that the device-cloud collaboration module receives the second instruction, the device-cloud collaboration module may perform step S602.

### S603: The device-cloud collaboration module determines whether to directly execute the first instruction.

It should be noted that the device-cloud collaboration module determines whether to directly execute the first instruction, that is, determines whether the first instruction is the target instruction corresponding to the speech signal. It may be understood that, if the device-cloud collaboration module determines that the first instruction is the target signal corresponding to the speech signal, the device-cloud collaboration module may directly execute the first instruction. If the device-cloud collaboration module is not sure whether the first instruction is the target signal corresponding to the speech signal, the device-cloud collaboration module may wait for the second instruction, and then comprehensively decide, based on the first instruction and the second instruction, which one is the target signal corresponding to the speech signal.

In some embodiments, when determining that the speech signal has no decision-making result, according to the decision-making rule, the device-cloud collaboration module may determine, based on the first decision-making information, whether the first instruction is capable of being directly executed. The first decision-making information may include the decision-making result of the previous round, the status identifier of the dialog of the previous round, the device-side intent (NLU) result of the current round, and the device-side instruction (DM) result of the current round. The first decision-making information may further include the device-side confidence level. The device-side confidence level may be obtained by the NLU module of the vehicle based on a speech signal of the current round, or may be obtained by the ASR module based on a speech signal of the current round, or may be obtained by the vehicle by combining a confidence level obtained by the NLU module and a confidence level obtained by the ASR module.

The decision-making result of the previous round indicates whether a target instruction of decision-making of the previous round is the instruction generated by the server or the instruction generated by the vehicle. The status identifier of the dialog of the previous round indicates whether the dialog of the previous round is a single-round dialog or a multi-round dialog. The device-side intent result of the current round may include a new intent or a multi-round intent. The device-side instruction result of the current round may be normality or abnormity. The normality may include "result" and "partial result", and the abnormal may be "no result". For example, when the vehicle does not support weather querying, the device-side instruction result of the current round obtained by the terminal-cloud collaboration module may be "no result". For another example, when the speech signal includes a plurality of intents, if the device-cloud collaboration module can execute an instruction corresponding to a part of the plurality of intents, the device-side instruction result of the current round is "partial result".

In an implementation, according to the decision-making rule, the device-cloud collaboration module may determine, based on the decision-making result of the previous round, the status identifier of the dialog of the previous round, the device-side intent result of the current round, and the device-side instruction result of the current round, whether to execute the first instruction. For example, when the decision-making rule includes: The decision-making result of the previous round is the vehicle, the status identifier of the dialog of the previous round indicates a plurality of rounds, the device-side intent result of the current round includes a multi-round intent, and the device-side instruction result of the current round is normal, it is determined that the first instruction is capable of being executed. In this case, when determining that the first decision-making information satisfies the decision-making rule, the device-cloud collaboration module determines that the first instruction is capable of being executed.

Further, if the device-cloud collaboration module determines that the first instruction is capable of being executed, step S605 is performed. If the first instruction is not capable of being directly executed, step S606 is performed, that is, step S607 is performed after the second instruction is waited for.

### S604: The device-cloud collaboration module discards the first instruction.

In some embodiments, after obtaining the first instruction, the device-cloud collaboration module may query, from the storage, whether the speech signal has the decision-making result. Further, when finding, through querying, that the speech signal has the decision-making result, the device-cloud collaboration module may discard the first instruction. It may be understood that, if the device-cloud collaboration module first obtains the second instruction, decides that the second instruction is the target instruction, and executes the target instruction, the device-cloud collaboration module may discard the first instruction when obtaining the first instruction, to avoid repeatedly performing the operation corresponding to the speech signal.

### S605: A service execution module executes the first instruction.

In an implementation, when receiving the first instruction sent by the device-cloud collaboration module, the service execution module executes the first instruction. For example, the content of the first instruction may be "invoking a weather application to obtain a weather condition of tomorrow and displaying the weather condition of tomorrow by using a widget". In this case, when determining to execute the first instruction, the device-cloud collaboration module 261 may invoke the weather application by using the service execution module 262, to obtain the weather condition of tomorrow, and display the weather condition of tomorrow by using the widget.

Further, after executing the first instruction, the service execution module may further update the decision-making result of the speech signal to "there is a decision-making result". In this case, when receiving the second instruction from the server, the device-cloud collaboration module queries the decision-making result of the speech signal and sends an instruction identifier indicating that the speech signal is executed. In this case, the device-cloud collaboration module may discard the second instruction, to avoid performing an unnecessary operation. For example, after executing the first instruction, the service execution module may write, into the public queue, an instruction identifier indicating that the speech signal has the decision-making result.

### S606: The device-cloud collaboration module determines, from the first instruction and the second instruction, the target instruction corresponding to the speech signal.

In some embodiments, when determining that the first instruction is not capable of being directly executed, the device-cloud collaboration module waits for the executable status of the second instruction. When the second instruction is not capable of being directly executed, the device-cloud collaboration module determines, from the first instruction and the second instruction based on the third decision-making information, the target instruction corresponding to the speech signal.

The third decision-making information may include the decision-making result of the previous round, the status identifier of the dialog of the previous round, the device-side intent result of the current round, the device-side instruction result of the current round, the cloud-side intent result of the current round, and the device-side instruction result of the current round. The third decision-making information may further include the cloud-side confidence level. The cloud-side intent result of the current round, the cloud-side instruction result of the current round, and the cloud-side confidence level may be sent by the server to the vehicle. The cloud-side confidence level may be obtained by the NLU module in the server based on the language signal of the current round, or may be obtained by the ASR module in the server based on the speech signal of the current round, or may be obtained by the server based on the confidence level obtained by the NLU module and the confidence level obtained by the cloud-side ASR module.

Optionally, when the device-cloud collaboration module does not receive the second instruction from the server within preset time, the device-cloud collaboration module determines the first instruction as the target instruction, and then step S607 is performed.

Optionally, when the device-cloud collaboration module does not receive the second instruction from the server within preset time, the device-cloud collaboration module does not execute the first instruction, and does not respond to the speech signal or remind the user of unavailability.

### S607: The service execution module executes the target instruction corresponding to the speech signal.

In some embodiments, after executing the target instruction, the service execution module may further store a decision-making result of the current round. For example, when the target instruction is the first instruction, the service execution module writes, into the public queue, an instruction identifier indicating that an instruction used for the speech information in the dialog of the current round is the first instruction from the vehicle.

FIG. 7 is an example of a schematic flowchart of a decision-making method in a case in which the vehicle receives the second instruction from the server. As shown in FIG. 7, the decision-making method may include some or all of the following steps.

### S701: The device-cloud collaboration module obtains the second instruction corresponding to the speech signal.

The device-cloud collaboration module is deployed in the voice assistant of the vehicle.

In some embodiments, the vehicle receives the second instruction from the server.

### S702: The device-cloud collaboration module queries whether the speech signal has a decision-making result.

In some embodiments, after obtaining the second instruction, the device-cloud collaboration module may first query whether the operation corresponding to the speech signal is performed. Further, when finding, through querying, that the speech signal has no decision-making result, the device-cloud collaboration module may perform step S703, that is, further determine whether the second instruction is capable of being directly executed. When finding, through querying, that the speech signal has the decision-making result, the device-cloud collaboration module may perform step S704, that is, discard the second instruction. It may be understood that, if the device-cloud collaboration module first obtains the first instruction, decides that the first instruction is the target instruction, and executes the target instruction, the device-cloud collaboration module may discard the second instruction when obtaining the second instruction, to avoid repeatedly performing the operation corresponding to the speech signal.

In some other embodiments, when obtaining the second instruction or the first instruction, the device-cloud collaboration module may further store, in the storage, an instruction identifier indicating that the instruction is obtained. The storage may be the foregoing public queue. In this case, when obtaining the second instruction, the device-cloud collaboration module may first query the instruction identifier to determine whether the first instruction is obtained. When finding, through querying, that the device-cloud collaboration module does not receive the first instruction from the server, the device-cloud collaboration module may perform step S703. When finding, through querying, that the device-cloud collaboration module receives the first instruction, the device-cloud collaboration module may perform step S702.

For specific content of step S703, refer to the related descriptions of step S603. Details are not described herein again.

### S703: The device-cloud collaboration module determines whether to directly execute the second instruction.

It should be noted that the device-cloud collaboration module determines whether to directly execute the second instruction, that is, determines whether the second instruction is the target instruction corresponding to the speech signal.

In some embodiments, when determining that the speech signal has no decision-making result, according to the decision-making rule, the device-cloud collaboration module may determine, based on the second decision-making information, whether the second instruction is capable of being directly executed. The second decision-making information may include the decision-making result of the previous round, the status identifier of the dialog of the previous round, the cloud-side intent (NLU) result of the current round, and the cloud-side instruction (DM) result of the current round. The second decision-making information may further include the cloud-side confidence level. The decision-making result of the previous round and the status identifier of the dialog of the previous round may be obtained from local storage. The cloud-side intent result of the current round, the cloud-side instruction result of the current round, and the cloud-side confidence level may be sent by the server to the vehicle.

In an implementation, according to the decision-making rule, the device-cloud collaboration module may determine, based on the decision-making result of the previous round, the status identifier of the dialog of the previous round, the device-side intent result of the current round, and the device-side instruction result of the current round, whether to execute the second instruction. For example, when the decision-making rule includes: The decision-making result of the previous round is the vehicle, the status identifier of the dialog of the previous round indicates a plurality of rounds, the device-side intent result of the current round is a multi-round intent, and the device-side instruction result of the current round is normal, it is determined that the second instruction is capable of being executed. In this case, when determining that the second decision-making information satisfies the decision-making rule, the device-cloud collaboration module determines that the second instruction is capable of being executed.

Further, if the device-cloud collaboration module determines that the second instruction is capable of being executed, step S705 is performed. If the second instruction is not capable of being directly executed, step S706 is performed, that is, step S707 is performed after the first instruction is waited for.

### S704: The device-cloud collaboration module discards the second instruction.

In some embodiments, after obtaining the second instruction, the device-cloud collaboration module may query, from the storage, whether the speech signal has the decision-making result. Further, when finding, through querying, that the speech signal has the decision-making result, the device-cloud collaboration module may discard the second instruction. It may be understood that, if the device-cloud collaboration module first obtains the first instruction, decides that the first instruction is the target instruction, and executes the target instruction, the device-cloud collaboration module may discard the second instruction when obtaining the second instruction, to avoid repeatedly performing the operation corresponding to the speech signal.

### S705: A service execution module executes the second instruction.

In an implementation, when receiving the second instruction sent by the device-cloud collaboration module, the service execution module executes the second instruction. For example, content of the second instruction may be "invoking a weather application to obtain a weather condition of tomorrow and displaying the weather condition of tomorrow by using a widget". In this case, when determining to execute the second instruction, the device-cloud collaboration module 261 may invoke the weather application by using the service execution module 262, to obtain the weather condition of tomorrow, and display the weather condition of tomorrow by using the widget.

Further, after executing the second instruction, the service execution module may further update the decision-making result of the speech signal to "there is a decision-making result". In this case, when receiving the first instruction from the server, the device-cloud collaboration module queries the decision-making result of the speech signal and sends an instruction identifier indicating that the speech signal is executed. In this case, the device-cloud collaboration module may discard the first instruction, to avoid performing an unnecessary operation. For example, after executing the second instruction, the service execution module may write, into the public queue, an instruction identifier indicating that the speech signal has the decision-making result.

### S706: The device-cloud collaboration module determines, from the first instruction and the second instruction, the target instruction corresponding to the speech signal.

In some embodiments, the device-cloud collaboration module may determine, from the second instruction and the first instruction based on third decision-making information, the target instruction corresponding to the speech signal.

The third decision-making information may include the decision-making result of the previous round, the status identifier of the dialog of the previous round, the device-side intent result of the current round, the device-side instruction result of the current round, the cloud-side intent result of the current round, and the device-side instruction result of the current round. The third decision-making information may further include the device-side confidence level and the cloud-side confidence level.

In some other embodiments, when the device-cloud collaboration module does not receive the first instruction within preset time, the device-cloud collaboration module may determine the second instruction as the target instruction, and then step S707 is performed.

### S707: The service execution module executes the target instruction corresponding to the speech signal.

In some embodiments, after executing the target instruction, the service execution module may further store a decision-making result of the current round. For example, when the target instruction is the second instruction, the service execution module writes, into the public queue, an instruction identifier indicating that an instruction used for the speech information in the dialog of the current round is the second instruction from the vehicle.

In some embodiments, the target instruction is executed by the server. In other words, in step S306, the vehicle sends the target instruction to the server, so that the server executes the target instruction.

In some application scenarios, there is a conflict between vertical fields of the terminal device and the server. To be specific, for a same speech signal, the first instruction obtained by the terminal device is executed by the terminal device, and the first instruction obtained by the server is executed by the server. In this case, both the first instruction and the second instruction are likely to be executed. For example, in a scenario in which a person, a vehicle, and a home are interconnected, the server may control a smart home, and the vehicle may control an in-vehicle device. In this case, there is a severe conflict between a vertical field statement of the server and a vertical field statement of the vehicle, and simultaneous execution is likely to occur. For example, when the user says "turn on the air conditioner", both air conditioners in the vehicle and at home may be turned on. For the foregoing case, in this embodiment of this application, the vehicle selects the first instruction and the second instruction, to ensure that only one instruction is executed.

FIG. 8 shows another human-computer dialog method according to an embodiment of this application. The method includes some or all of the following steps.

### S801: A vehicle receives a speech signal by using a voice assistant.

For specific content of step S801, refer to the related descriptions in step S301. Details are not described herein again.

S802: The vehicle sends the speech signal to both a device-side ASR module and a server by using the voice assistant.

In some embodiments, when receiving the speech signal, the vehicle sends the speech signal to the server. In addition, the vehicle may perform S803 to process the speech signal, to determine a first instruction corresponding to the speech signal. For example, a device-cloud collaboration module in the voice assistant sends the speech signal to an ASR module. After the ASR module converts the speech signal into text information, an NLU module obtains the first instruction based on the text information. That the vehicle sends the speech signal to the device-side ASR by using the voice assistant may alternatively be that the voice assistant invokes an ASR interface to process the speech signal.

For specific content of step S802, refer to the related descriptions in step S302. Details are not described herein again.

### S803: The vehicle determines, by using the device-side ASR/NLU/DM module, the first instruction corresponding to the speech signal.

For example, the device-cloud collaboration module in the voice assistant sequentially sends the speech signal to the ASR module, the NLU module, and the DM module, to obtain the first instruction.

For specific content of step S802, refer to the related descriptions in step S303. Details are not described herein again.

### S804: The vehicle sends the first instruction to the voice assistant.

In an implementation, after obtaining the first instruction, the DM module in the vehicle sends the first instruction to the device-cloud collaboration module in the voice assistant.

### S805: After receiving the speech signal, the server determines the second instruction corresponding to the speech signal.

For specific content of step S805, refer to the related descriptions in step S304. Details are not described herein again.

### S806: The server sends a second instruction to the vehicle.

In some embodiments, the DM module in the server stops execution before executing the second instruction, and sends the second instruction to the vehicle.

For specific content of step S806, refer to the related descriptions in step S305. Details are not described herein again.

### S807: The vehicle determines, from the first instruction and the second instruction, a target instruction corresponding to the speech signal.

In some embodiments, the vehicle may determine the target instruction after obtaining the first instruction and the second instruction.

For specific content of determining the target instruction, refer to the foregoing related descriptions. Details are not described herein again.

### S808: When determining that the target instruction is the first instruction, the vehicle executes the first instruction by using a service execution module.

For example, the first instruction is turning on an air conditioner in the vehicle. When determining that the target instruction is the first instruction, the voice assistant determines that a user intent is to turn on the air conditioner in the vehicle, and turns on the air conditioner in the vehicle by using the service execution module.

For specific content of executing the first instruction by the vehicle, refer to the foregoing related descriptions. Details are not described herein again.

In some other embodiments, when determining that the target instruction is the first instruction, the vehicle may further send a notification message to the server, where the notification message indicates the server not to execute the second instruction.

### S809: When determining that the target instruction is the second instruction, the vehicle sends an execution notification to the server.

The execution notification indicates the server to execute the second instruction, and the execution instruction may include a decision-making result (namely, the second instruction), and may further include context information, namely, content of a dialog of a current round of and content of dialogs of previous N rounds.

For example, the first instruction is turning on an air conditioner at home. When determining that the target instruction is the second instruction, the voice assistant determines that a user intent is to turn on the air conditioner at home, and sends the execution notification to the server.

### S810: The server executes the second instruction in response to the execution notification.

In an implementation, if the second instruction is controlling a home device, the DM module in the server may load a context, and invoke HiLink to implement home control.

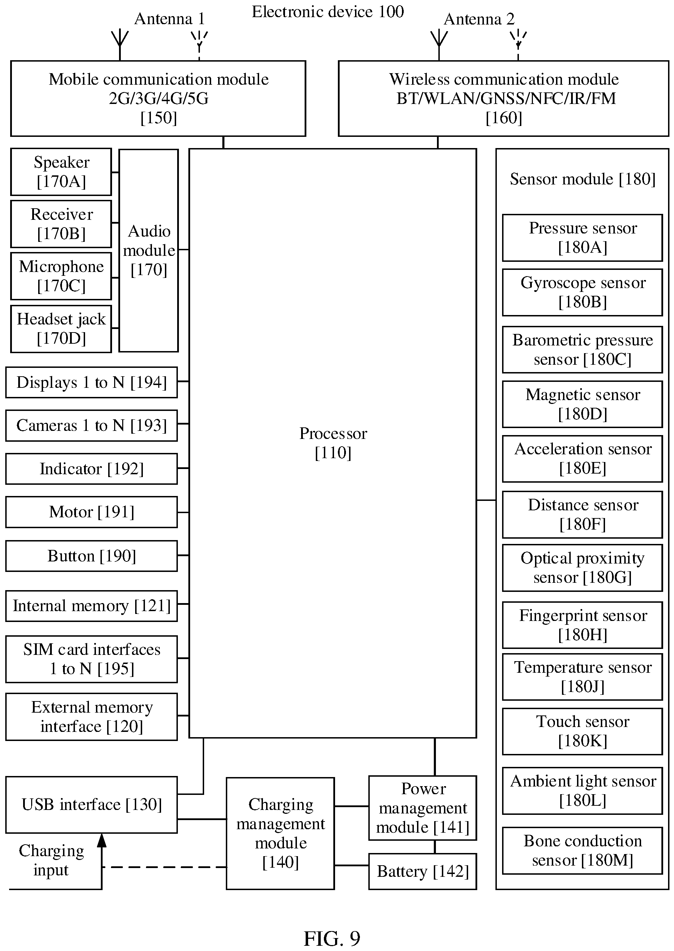

FIG. 9 is an example of a diagram of a hardware structure of an electronic device 100.

The following specifically describes embodiments by using the electronic device 100 as an example. It should be understood that, the electronic device 100 may have more or fewer parts than those shown in the figure, may combine two or more parts, or may have a different part configuration. Components shown in the figure may be implemented by hardware, software, or a combination of hardware and software, including one or more signal processing and/or application-specific integrated circuits.

The electronic device 100 may include: a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identify module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction reading and instruction execution.

A memory may further be disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor may directly invoke the instructions or the data from the memory. This avoids repeated access and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a shooting function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The SIM interface may be configured to communicate with the SIM card interface 195, to implement a function of transmitting data to an SIM card or reading data in an SIM card.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device, or may be configured to connect to a headset, to play an audio by using the headset. The interface may be further configured to connect to another electronic device like an AR device.

It may be understood that an interface connection relationship between the modules shown in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger.

The power management module 141 is configured to connect the battery 142 and the charging management module 140 to the processor 110. The power management module 141 receives input of the battery 142 and/or the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a wireless communication solution that is applied to the electronic device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), and displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), and the like. In some embodiments, the electronic device 100 may include one or N displays 194, where N is a positive integer greater than 1.

The electronic device 100 may implement a shooting function through the camera 193, the ISP, the video codec, the GPU, the display 194, the application processor and the like.

The ISP is configured to process data fed back by the camera 193. For example, during shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness and the like of the image. The ISP may further optimize parameters such as exposure and a color temperature of a shooting scenario. In some embodiments, the ISP may be disposed in the camera 193.

The camera 193 may be configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal. In addition to the digital image signal, the digital signal processor may further process another digital signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system and an application required by at least one function (for example, a facial recognition function, a fingerprint recognition function, and a mobile payment function). The data storage area may store data (such as facial information template data and a fingerprint information template) created during use of the electronic device 100. In addition, the internal memory 121 may include a high-speed random access memory, and may further include a nonvolatile memory, for example, at least one magnetic disk storage device, a flash memory device, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "horn", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch position based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on an icon of a Messages application, an instruction for viewing an SMS message is performed. When a touch operation whose touch operation intensity is greater than or equal to the first pressure threshold is performed on the messages application icon, an instruction for creating a new SMS message is performed.

The gyroscope sensor 180B may be configured to determine a moving posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during shooting. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall effect sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application, for example, switching between a landscape mode and a portrait mode or a pedometer.

The distance sensor 180F is configured to measure a distance. The electronic device 100 may measure the distance in an infrared manner or a laser manner. In some embodiments, in a shooting scenario, the electronic device 100 may measure a distance through the distance sensor 180F to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided on the display 194. In some other embodiments, the touch sensor 180K may also be disposed on a surface of the electronic device 100 at a location different from that of the display 194.

The button 190 includes a power button, a volume button, and the like. The button 190 may be a mechanical button, or may be a touch-sensitive button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. Touch vibration feedback effect may be further customized.

The indicator 192 may be an indicator light, and may indicate a charging status and a power change, or may indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication.

In embodiments, the electronic device 100 may perform the human-computer dialog method by using the processor 110.

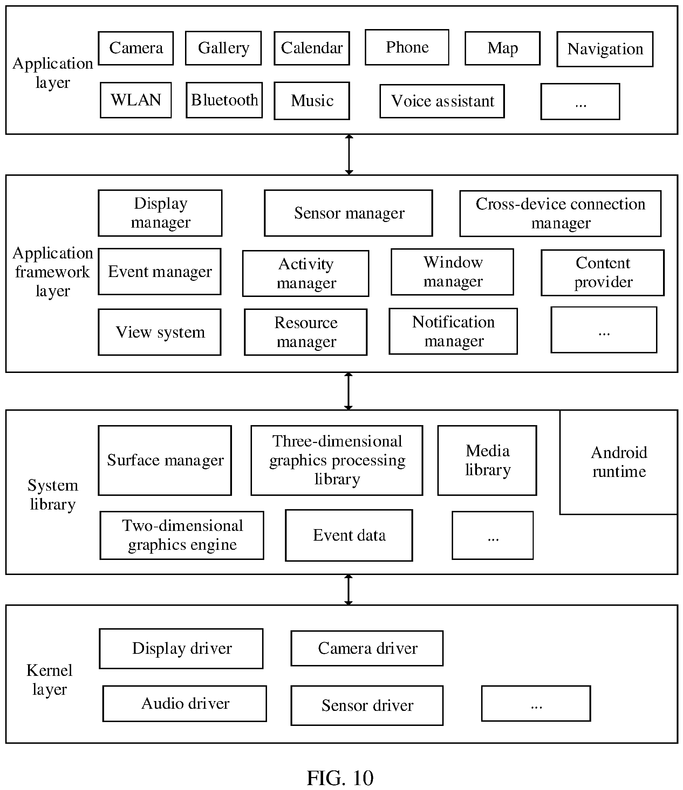

FIG. 10 is a block diagram of a software structure of the electronic device 100 according to an embodiment of this application.

In a hierarchical architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 10, the application packages may include applications such as Camera, Gallery, Calendar, Phone, Maps, Navigation, WLAN, Bluetooth, Music, Videos, Messages, and Voice assistant.

In some embodiments, a user may perform a communication connection to another device (for example, the foregoing server) by using the voice assistant, for example, send a speech signal to the another device or obtain a speech recognition result (for example, the foregoing second instruction) sent by the another device.

The application framework layer provides an application programming interface (application programming interface, API) and a programming framework for an application at the application layer. The application framework layer includes some predefined functions.

As shown in FIG. 10, the application framework layer may include a display (display) manager, a sensor (sensor) manager, a cross-device connection manager, an event manager, an activity (activity) manager, a window manager, a content provider, a view system, a resource manager, a notification manager, and the like.

The display manager is used for display management of the system, and is responsible for management of all display-related transactions, including creation, destruction, direction switching, size and status change, and the like. Generally, a single device has only one default display module, namely, a main display module.

The sensor manager is responsible for sensor status management, and manages applications to listen to sensor events and report the events to the applications in real time.

The cross-device connection manager is configured to: establish a communication connection to the terminal device 200, and send a speech signal to the terminal device 200 based on the communication connection.

The event manager is used for an event management service of the system, and is responsible for receiving events uploaded by the bottom layer and distributing the events to each window, to complete event receiving and distribution and the like.

The activity manager is configured to manage activity (Activity) components, including startup management, life cycle management, and activity direction management.

The window manager is configured to manage a window program. The window manager may obtain a size of a display, determine whether there is a status bar, perform screen locking, take a screenshot, and the like. The window manager is further configured to be responsible for window display management, including management associated with a window display manner, a display size, a display coordinate location, a display level, and the like.

For specific execution processes of the foregoing embodiments, refer to related content of the human-computer dialog method below.

The content provider is configured to: store and obtain data, and enable the data to be accessed by an application. The data may include a video, an image, an audio, calls that are dialed and answered, a browsing history, a bookmark, a phone book, and the like.

The view system includes visual controls such as a control for displaying a text and a control for displaying a picture. The view system may be configured to construct an application. A display interface may include one or more views. For example, a display interface including a notification icon of Messages may include a text display view and an image display view.

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library (which may also be referred to as a data management layer) may include a plurality of functional modules, for example, a surface manager (surface manager), a media library (Media Library), a three-dimensional graphics processing library (for example, OpenGL ES), a 2D graphics engine (for example, SGL), and event data.

The surface manager is configured to: manage a display subsystem, and provide fusion of 2D and 3D layers for a plurality of applications.

The media library supports playback and recording in a plurality of commonly used audio and video formats, and static image files. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

An embodiment of this application further provides an electronic device. The electronic device includes one or more processors and one or more memories, the one or more memories are coupled to the one or more processors, the one or more memories are configured to store computer program code, the computer program code includes computer instructions, and when the one or more processors execute the computer instructions, the electronic device is enabled to perform the method described in the foregoing embodiments.

An embodiment of this application further provides a computer program product including instructions. When the computer program product is run on an electronic device, the electronic device is enabled to perform the method described in the foregoing embodiments.

An embodiment of this application further provides a computer-readable storage medium, including instructions. When the instructions are run on an electronic device, the electronic device is enabled to perform the method described in the foregoing embodiments.

It can be understood that the various implementations of this application may be arbitrarily combined to achieve different technical effects.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. A computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

A person of ordinary skill in the art may understand that all or some of the processes of the methods in embodiments may be implemented by a computer program instructing related hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

In summary, what is described above is merely embodiments of the technical solutions of this application, but is not intended to limit the protection scope of this application. Any modification, equivalent substitution, and improvement made based on the disclosure of this application shall fall within the protection scope of this application.

## Claims

1. A human-computer dialog method, applied to a terminal device, wherein the method comprises:
receiving, by the terminal device, a speech signal;
obtaining, by the terminal device, a first instruction based on the speech signal;
sending, by the terminal device, the speech signal or a text of the speech signal to a server, wherein the server is configured to obtain a second instruction based on the speech signal, and the text of the speech signal is obtained by the terminal device based on the speech signal;
receiving, by the terminal device, the second instruction sent by the server; and
when a first obtained instruction is not capable of being directly executed, selecting, by the terminal device, a target instruction from the first instruction and the second instruction for execution, wherein the target instruction is the first instruction or the second instruction.

2. The method according to claim 1, wherein the method further comprises:
executing, by the terminal device, the first obtained instruction when the first obtained instruction is capable of being directly executed; and
skipping, by the terminal device, executing a later obtained instruction.

3. The method according to claim 1 or 2, wherein before the selecting a target instruction from the first instruction and the second instruction for execution, the method further comprises:
when obtaining the first instruction, if the second instruction is not received, determining, by the terminal device, an executable status of the first instruction, wherein the executable status comprises direct execution and non-direct execution; and
when determining that the first instruction is not capable of being directly executed, waiting, by the terminal device, for the second instruction.

4. The method according to claim 3, wherein the determining an executable status of the first instruction comprises:
determining, by the terminal device, the executable status of the first instruction based on first decision-making information, wherein the first decision-making information comprises at least one of a decision-making result of a previous round, a status identifier of a dialog of the previous round, an intent result of a current round determined by the terminal device, an instruction result of the current round determined by the terminal device, and a confidence level of the first instruction, wherein
the decision-making result of the previous round indicates a source of an instruction executed for the dialog of the previous round, and the source comprises the server and the terminal device; the status identifier indicates a single round or a plurality of rounds; the intent result indicates a new intent or a multi-round intent; and the instruction result comprises normality or abnormity, and the abnormity indicates that an operation corresponding to the speech signal is not capable of being performed.

5. The method according to any one of claims 1 to 4, wherein before the selecting a target instruction from the first instruction and the second instruction for execution, the method further comprises:
when obtaining the second instruction, if the first instruction is not received, determining, by the terminal device, an executable status of the second instruction; and
when determining that the second instruction is not capable of being directly executed, waiting, by the terminal device, for the first instruction.

6. The method according to claim 5, wherein the determining an executable status of the second instruction comprises:
determining, by the terminal device, the executable status of the second instruction based on second decision-making information, wherein the second decision-making information comprises at least one of the decision-making result of the previous round, the status identifier of the dialog of the previous round, an intent result of the current round determined by the server, and an instruction result of the current round determined by the server, wherein
the decision-making result of the previous round indicates the source of the instruction executed for the dialog of the previous round, and the source comprises the server and the terminal device; the status identifier indicates a single round or a plurality of rounds; the intent result indicates a new intent or a multi-round intent; and the instruction result comprises normality or abnormity, and the abnormity indicates that the operation corresponding to the speech signal is not capable of being performed.

7. The method according to claims 1 to 6, wherein the selecting a target instruction from the first instruction and the second instruction for execution comprises:
determining, by the terminal device, the target instruction from the first instruction and the second instruction based on third decision-making information, wherein
the third decision-making information comprises at least one of the decision-making result of the previous round, the status identifier of the dialog of the previous round, the intent result of the current round determined by the server, the instruction result of the current round determined by the server, the intent result of the current round determined by the terminal device, the instruction result of the current round determined by the terminal device, and the confidence level of the first instruction, wherein
the decision-making result of the previous round indicates the source of the instruction executed for the dialog of the previous round, and the source comprises the server and the terminal device; the status identifier indicates a single round or a plurality of rounds; the intent result indicates a new intent or a multi-round intent; and the instruction result comprises normality or abnormity, and the abnormity indicates that the operation corresponding to the speech signal is not capable of being performed.

8. The method according to any one of claims 1 to 7, wherein the method further comprises:
sending, by the terminal device, a dialog status to the server, wherein the dialog status is used by the server to generate the second instruction, and the dialog status comprises at least one of the decision-making result of the previous round and the status identifier of the dialog of the previous round.

9. The method according to claims 1 to 8, wherein the obtaining, by the terminal device, a first instruction based on the speech signal comprises:
obtaining, by the terminal device, an intent of the speech signal based on the speech signal; and
determining, by the terminal device, the first instruction based on the intent of the speech signal.

10. The method according to any one of claims 1 to 9, wherein the obtaining, by the terminal device, a first instruction based on the speech signal comprises:
inputting the speech signal to a device-side model, to obtain an intent corresponding to the first instruction; and
obtaining, by the terminal device, the first instruction based on the intent corresponding to the first instruction.

11. The method according to claim 10, wherein the method further comprises:
training, by the terminal device, the device-side model by using the speech signal and an intent corresponding to the second instruction as training samples.

12. The method according to claims 1 to 11, wherein the selecting a target instruction from the first instruction and the second instruction for execution comprises:
executing, by the terminal device, the target instruction; or sending, by the terminal device, the target instruction to the server, wherein the server is configured to execute the target instruction.

13. A human-computer dialog method, applied to a server, wherein the method comprises:
receiving, by the server, a speech signal or a text of the speech signal from a terminal device, wherein the text of the speech signal is obtained by the terminal device based on the speech signal;
obtaining, by the server, a second instruction based on the speech signal;
sending, by the server, the second instruction to the terminal device;
receiving, by the server, a target instruction from the terminal device, wherein the target instruction is obtained by the terminal device based on a first instruction and the second instruction, the target instruction is the first instruction or the second instruction, and the first instruction is obtained by the terminal device based on the speech signal; and
executing, by the server, the target instruction.

14. An electronic device, wherein the electronic device comprises one or more processors and one or more memories, the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 13.

15. A computer program product comprising instructions, wherein when the computer program product is run on an electronic device, the electronic device is enabled to perform the method according to any one of claims 1 to 13.

16. A computer-readable storage medium, comprising instructions, wherein when the instructions are run on an electronic device, the electronic device is enabled to perform the method according to any one of claims 1 to 13.

17. A human-computer dialog system, wherein the human-computer dialog system comprises a terminal device and a server, the terminal device is configured to perform the method according to any one of claims 1 to 12, and the server is configured to perform the method according to claim 13.
